# EUROPEAN PATENT APPLICATION

(11) **EP 4 834 831 A1**
(43) Date of publication of application: **04.11.2026**
(21) Application number: 24913146.7
(22) Date of filing: 27.12.2024
(51) Int. Cl.: C01B 32/05, H01B 1/04, H01M 4/62

(54) **CARBON MATERIAL AND METHOD FOR PRODUCING SAME, DISPERSION, COMPOSITION FOR ELECTRODE, SLURRY FOR ELECTRODE, ELECTRODE, AND LITHIUM ION SECONDARY BATTERY**

(30) Priority: 28.12.2023 JP 2023223523; 01.05.2024 JP 2024074576
(71) Applicant: 3DC Inc., Sendai-shi, Miyagi 980-8577 (JP)
(72) Inventor: NISHIHARA Hirotomo, Sendai-shi, Miyagi 980-8577 (JP); YAMAGUCHI Togo, Sendai-shi, Miyagi 980-8577 (JP); KAKU Rikuto, Sendai-shi, Miyagi 980-8577 (JP); TAKASE Atsushi, Sendai-shi, Miyagi 980-8577 (JP); OMARU Atsuo, Sendai-shi, Miyagi 980-8577 (JP); KIUCHI Takashi, Saku-shi, Nagano 385-0051 (JP)
(74) Representative: Winter, Brandl - Partnerschaft mbB
(86) International application number: PCT/JP2024/046489
(87) International publication number: WO 2025/143260

(57) **Abstract**

The present invention intends to provide a carbon material which exhibits a high oil absorption capability and therefore can exhibit excellent battery characteristics and the like. The carbon material has an oil absorption capability of 550 mL or more per 100 g in accordance with JIS K5101-13-1:2004. The present invention also includes a method for producing a carbon material involving a step for providing a carbonaceous layer-coated template material in which a template material of an agglomerate in a bead-chain-like configuration formed of agglomerated primary particles is coated with a carbonaceous layer covering a surface of the template material; together with a removal step for forming a carbon material precursor by removing the mold material from the carbonaceous layer-coated template material.

## Description

### TECHNICAL FIELD

The present invention relates to a carbon material, a method for producing a carbon material, a liquid dispersion, a composition for an electrode, a slurry for an electrode, an electrode, and a lithium-ion secondary battery.

### BACKGROUND ART

Carbon materials, including carbon black and graphite, have been used for various applications. They have been widely used in various fields, for example, electrically-conductive carbon and graphite as battery materials, carbon black as a reinforcing material for rubber and other materials, and activated carbon as an adsorbing agent. Carbon materials are also widely used for lithium-ion batteries, which have found wide applications in daily life, such as smartphones and electric vehicles (EVs), since their inception. Recently, considerable research has also been conducted on carbon materials for secondary batteries, including lithium-ion batteries.

For example, Patent Document 1 discloses a non-aqueous electrolyte secondary battery including a positive electrode, a negative electrode, a non-aqueous electrolyte, and an electrically-conductive material including flake graphite or carbon black, which can improve high-rate discharge characteristics.

In general, carbon materials tend to have increased electrical conductivity and reinforcing properties as their fine particles agglomerate to form a continuous structure, which is referred to as a "structure". Carbon materials with a developed structure tend to have larger voids between agglomerates (primary agglomerates, also called aggregates) and thus to have a higher oil absorption. Thus, electrically conductive carbon materials that have been frequently used are those with an oil absorption of around 150 to 500 mL/100 g, such as Ketjen Black with an oil absorption of around 400 mL/100 g. Such researches have still been continued these days on developing carbon materials with a high oil absorption capacity for use as battery materials and so on.

For example, Patent Document 2 discloses a positive electrode material that is excellent in holding electrolyte and cycle characteristics by containing a carbon material having the properties: a BET specific surface area of 10 to 200 m²/g, a pore volume of 0.2 mL/g or more, and a DBP absorption (oil absorption) of 150 mL/100 g or more, for example, 210 to 220 mL/100 g.

Patent Document 3 discloses a lithium-ion secondary battery with good charge-discharge cycle characteristics containing carbon black with a DBP absorption (oil absorption) of 240 mL/100 g or more, such as the maximum value of 343 mL/100 g in Examples.

Development of other new carbon materials is also ongoing. For example, Patent Document 4 discloses that a graphene powder having a BET specific surface area of 80 to 250 m²/g and having an oxygen-to-carbon elemental ratio (O/C) of 0.09 to 0.3 as measured by X-ray photoelectron spectroscopy has high dispersibility and ion conductivity and is suitable for lithium-ion secondary batteries.

Moreover, Patent Document 5 discloses a method for producing a porous carbon material, which includes a coating step including forming a graphene-containing precursor on surfaces of alkaline earth metal oxide particle templates; and a separation and removal step including dissolving the templates with a fluorine-free acid to separate the precursor from the templates. Patent Document 5 discloses a porous carbon material with a stack of 1.9 or 2.5 graphene layers and suggests that such a porous carbon material may find applications such as electrode materials for secondary batteries.

### Citation List

### Patent Documents

Patent Document 1: Japanese Unexamined Patent Application, Publication No. 2004-22177
Patent Document 2: Japanese Unexamined Patent Application, Publication No. 2019-91587
Patent Document 3: PCT International Publication No. WO2017/119428
Patent Document 4: Japanese Unexamined Patent Application, Publication No. 2020-100556
Patent Document 5: Japanese Unexamined Patent Application, Publication No. 2021-84819

### DISCLOSURE OF THE INVENTION

### Problems to be Solved by the Invention

Although various carbon materials have been developed as described above, further improvement is required in their functionality. For example, the carbon materials disclosed in Patent Documents 1 to 5 may exhibit insufficient electrical conductivity to lack the properties of secondary batteries including fast discharge characteristics and capacity characteristics.

The present invention has been made in view of those circumstances and intends to provide a carbon material that has a high oil absorption (oil absorption capability) and thus can exhibit various high functionalities. More specifically, it is an object of the present invention to provide: a carbon material that has a high oil absorption and thus can form, for example, a polymer composite material with high electrical conductivity and can be used to produce a lithium-ion secondary battery with improved performance such as improved fast discharge characteristics, capacity characteristics, and charge-discharge characteristics; a method for producing such a carbon material; a liquid dispersion including a dispersion of such a carbon material; a composition for an electrode containing such a carbon material; a slurry for an electrode containing such a carbon material; an electrode containing such a carbon material; and a lithium-ion secondary battery containing such a carbon material.

### Means for Solving the Problems

As a result of intensive research, the inventors have successfully produced a novel carbon material having a high oil absorption and have found that such a carbon material can exhibit high functionalities and can be used to produce, for example, secondary batteries that have improved capacity characteristics and significantly improved fast discharge characteristics while maintaining a certain level of charge-discharge characteristics.

The inventors have also found that a carbon material including a combined structure to have a significantly improved oil absorption can be created by a process including: providing a carbonaceous layer-coated template material including a template material of agglomerates of primary particles agglomerated in a bead chain form and a carbonaceous layer provided to cover the surface of the template material; removing the template material from the carbonaceous layer-coated template material; and optionally heating the resulting product. Moreover, the inventors have found that such a carbon material is usable for a lithium-ion secondary battery, for example, to have high capacity retention at 2C (fast discharge characteristics), high capacity, and high initial charge-discharge characteristics.

The present inventors have completed the present invention based on those findings. Specifically, the present invention provides aspects (1) to (24) below.
(1) A carbon material having an oil absorption of 550 mL/100 g or more in accordance with JIS K 5101-13-1:2004.
(2) The carbon material according to aspect (1), comprising one or more combined structures each having an extended shape with pores, wherein the one or more combined structures each have hollow particulate parts combined in a bead-chain-like configuration, and the hollow particulate parts each comprise a surrounding wall forming a comparted interior space of the hollow particulate parts and being made of a graphene structure-containing carbonaceous material.

The inventors have considered that a carbon material can have a high oil absorption, as defined in aspect (1) above, if it has a complex structure like highly conductive carbon black, together with a structure including an inner hollow and an outer carbonaceous layer having a carbon six-membered ring structure, preferably a graphene structure, surrounding the hollow. As a result of studies with such a structural design, the carbon material of aspect (2) above has been obtained.

(3) The carbon material according to aspect (1) or (2), wherein the carbon material has an intensity ratio (I_{G}/I_{2D}) of an intensity of a G band (I_{G}) to an intensity of a 2D band (I_{2D}) of 0.4 to 5.0 in Raman spectroscopic measurement.

The inventors have found that the carbon material having a Raman I_{G}/I_{2D} ratio, which is an index of the number of graphene layers in the carbon material, in the specified range can maintain pores with a specific size and can be excellent in holding electrolyte in addition to electron transfer ability to provide high lithium-ion conductivity, for example.

(4) The carbon material according to any one of aspects (1) to (3), wherein the carbon material has a mode pore size of 1 to 100 nm.

The inventors have also found that the carbon material having the specified mode pore size, which indicates the size of the hollow part of hollow particulate parts in the combined structure, can have a higher oil absorption and can be used to produce lithium-ion secondary batteries with highly increased fast discharge characteristics, capacity characteristics, and charge-discharge characteristics.

(5) The carbon material according to any one of aspects (1) to (4), wherein the carbon material has a total pore volume of 0.1 to 20 cc/g.

(6) The carbon material according to aspect (5), wherein the carbon material has a macropore volume of 5% or more with respect to the total pore volume.

(7) The carbon material according to any one of aspects (1) to (6), wherein the carbon material has an apparent density of 2 g/cc or less.

(8) The carbon material according to any one of aspects (1) to (7), wherein the carbon material has a BET specific surface area of 100 to 2,700 m²/g.

(9) The carbon material according to any one of aspects (1) to (8), wherein the carbon material has a crystallite size Lc(002) in a c-axis direction of 0.1 to 5 nm in X-ray diffraction (XRD) measurement.

(10) The carbon material according to any one of aspects (1) to (9), wherein the carbon material has an interplanar distance d002 between (002) planes of 3 to 5 Å in X-ray diffraction (XRD) measurement.

The inventors have also found that the carbon material with the specified Lc(002) (an index of the number of crystalline graphene layers determined by XRD measurement) and the specified BET specific surface area can have a higher oil absorption and can be used to produce, for example, lithium-ion secondary batteries with highly balanced characteristics including fast discharge characteristics, capacity characteristics, and charge-discharge characteristics.

(11) The carbon material according to any one of aspects (1) to (10), wherein the carbon material has a particle size distribution with a median diameter D50 of 1 to 100 µm in laser diffraction-scattering measurement.

(12) The carbon material according to any one of aspects (1) to (11), wherein the carbon material has a particle size distribution with a ratio of D90 to D10 (D90/D10 ratio) of 100 or less in laser diffraction-scattering measurement.

(13) The carbon material according to any one of aspects (1) to (12), wherein the carbon material has a particle size distribution with a ratio of D90 to mode pore size M (D90/M ratio) of 50,000 or less in laser diffraction-scattering measurement.

The inventors have also found that the carbon material can have a higher oil absorption and can be used to produce lithium-ion secondary batteries with highly increased fast discharge characteristics, capacity characteristics, and charge-discharge characteristics by having, for example, a particle size distribution with the specified median diameter D50 or the specified D90/D10 ratio, which indicates the size of the combined structure including combined hollow particles (hollow particulate parts) with interior spaces or the size of an agglomerate of the combined structures (what is called a secondary agglomerate of carbon material particles).

(14) The carbon material according to any one of aspects (1) to (13), wherein the carbon material is a graphene mesosponge.

(15) The carbon material according to any one of aspects (1) to (14), wherein the carbon material is for use in a secondary battery.

(16) A method for producing the carbon material according to any one of aspects (1) to (15), the method including:
providing a carbonaceous layer-coated template material that includes: a template material of an agglomerate of primary particles agglomerated in a bead-chain-like configuration; and a carbonaceous layer provided to cover the surface of the template material; and
removing the template material from the carbonaceous layer-coated template material to form a carbon material precursor.

(17) A method for producing the carbon material according to any one of aspects (1) to (15), the method including:
providing a carbonaceous layer-coated template material that comprises: a template material of an agglomerate of primary particles agglomerated in a bead-chain-like configuration; and a carbonaceous layer provided to cover the surface of the template material;
removing the template material from the carbonaceous layer-coated template material by dissolution using acid treatment to form a carbon material precursor; and
heating the carbon material precursor to produce a carbon material that comprises one or more combined structures each having an extended shape with pores, wherein the one or more combined structures each have hollow particulate parts combined in a bead-chain-like configuration, and the hollow particulate parts each comprise a surrounding wall forming a comparted interior space of the hollow particulate parts and being made of a graphene structure-containing carbonaceous material.

(18) The method for producing a carbon material according to aspect (16) or (17), wherein the template material includes at least one type of particles selected from the group consisting of ceramic particles and carbonate salt particles.

The inventors have also found that the carbon material according to any one of aspects (1) to (14) or according to aspect (15) can be easily produced by a process including: providing a specific template material; forming carbonaceous layers, such as graphene layers, on the surface of the template material; and then removing the template material. The inventors have further found that, for CVD reaction to deposit carbonaceous layers on the surface of the template material, the number of the carbonaceous layers to be deposited can be controlled by changing the type of the template material and other conditions.

(19) A liquid dispersion including: a dispersion medium; and the carbon material according to any one of aspects (1) to (15) dispersed in the dispersion medium.

(20) A composition for an electrode including: the carbon material according to any one of aspects (1) to (15); an active material; and a binder.

(21) A slurry for an electrode including a solvent; and the composition for an electrode according to aspect (20) dispersed in the solvent.

(22) An electrode including the carbon material according to any one of aspects (1) to (15).

(23) A lithium-ion secondary battery including the carbon material according to any one of aspects (1) to (15).

### Effects of the Invention

The present invention provides a carbon material that has a high oil absorption and thus can form, for example, a polymer composite material with high electrical conductivity and can provide batteries with excellent characteristics. The present invention also provides a carbon material that can be used to produce lithium-ion secondary batteries with highly increased fast discharge characteristics, capacity characteristics, and charge-discharge characteristics; a method for producing such a carbon material; a liquid dispersion including a dispersion of such a carbon material; a composition for an electrode including such a carbon material; a slurry for an electrode including such a carbon material; an electrode including such a carbon material; and a lithium-ion secondary battery including such a carbon material.

### BRIEF DESCRIPTION OF THE DRAWINGS

FIG. 1 is a transmission electron microscope (TEM) image of an example of a carbon material according to an embodiment of the present invention, measured at an acceleration voltage of 80 kV;
FIG. 2 is a transmission electron microscope (TEM) image of an example of a carbon material according to an embodiment of the present invention, measured at an acceleration voltage of 100 kV;
FIG. 3 is a transmission electron microscope (TEM) image of another example of a carbon material according to an embodiment of the present invention, measured at an acceleration voltage of 100 kV;
FIG. 4 is a graph showing an example of a Raman spectrum measured for a carbon material according to an embodiment of the present invention; and
FIG. 5 is a diagram illustrating an ultra-high-sensitivity vacuum TPD mass spectrometer used for temperature-programmed desorption analysis.

### PREFERRED MODE FOR CARRYING OUT THE INVENTION

Hereinafter, embodiments of the present invention will be described in detail, which are not intended to limit the present invention.

### <<Carbon Material>>

This embodiment is directed to a carbon material having an oil absorption of 550 mL/100 g or more. As used herein, the term "oil absorption" refers to the amount of absorption of refined linseed oil measured according to JIS K 5101-13-1:2004 (Test methods for pigments - Part 13: Oil absorption - Section 1: Refined linseed oil method). The carbon material with such a high oil absorption can be used to form electrodes that can provide batteries with excellent characteristics. In particular, the carbon material with such a high oil absorption can provide lithium-ion secondary batteries with highly improved fast discharge characteristics, capacity characteristics, and charge-discharge characteristics.

### <Oil Absorption>

The carbon material according to the present embodiment, which has an oil absorption of 550 mL/100 g or more as mentioned above, preferably has an oil absorption of 600 mL/100 g or more, more preferably 800 mL/100 g or more, even more preferably 900 mL/100 g or more, furthermore preferably 1,000 mL/100 g or more, still more preferably 1,400 mL/100 g or more. When used as a battery material, for example, the carbon material with such a high oil absorption can hold a large amount of an electrolyte solution and is less likely to cause delay in ion supply or a reduction in discharge capacity even during rapid battery reaction. The carbon material with such a high oil absorption can provide batteries with further improved capacity retention at 2C and other characteristics. The carbon material with such a high oil absorption can also be highly effective in reinforcing polymers, such as rubber.

The carbon material may have oil absorption up to any upper limit. For ease of maintaining the carbon material structure and controlling the amount for holding an electrolyte solution, the carbon material may have an oil absorption of 5,000 mL/100 g or less, preferably 4,000 mL/100 g or less, more preferably 3,500 mL/100 g or less, even more preferably 3,000 mL/100 g or less, furthermore preferably 2,500 mL/100 g or less.

For good balance between physical properties and control easiness, for example, the carbon material according to the present embodiment may specifically have an oil absorption of 550 to 5,000 mL/100 g, 600 to 4,500 mL/100 g, 700 to 4,000 mL/100 g, 900 to 3,500 mL/100 g, 1,000 to 3,000 mL/100 g, or 1,400 to 2500 mL/100 g. The carbon material can be prepared or used so as to have or provide a desired oil absorption depending on purpose. For example, when used to provide batteries with high capacity retention at 2C and good fast discharge characteristics, the carbon material preferably has an oil absorption of about 550 to about 1,500 mL/100 g, more preferably about 700 to about 1,300 mL/100 g.

### <Structure of Carbon Material>

The carbon material according to the present embodiment may have any structure as long as it has an oil absorption of 550 mL/100 g or more. As a non-limiting example, the carbon material preferably has one or more combined structures each having an extended shape with pores, wherein the one or more combined structures each have hollow particulate parts combined in a bead-chain-like configuration, and the hollow particulate parts each include a surrounding wall that forms a comparted interior space of each of the hollow particulate parts and is made of a graphene structure-containing carbonaceous material. For example, the surrounding wall does not need to entirely have a graphene (crystal) structure and may contain a carbon-based material having any other structure.

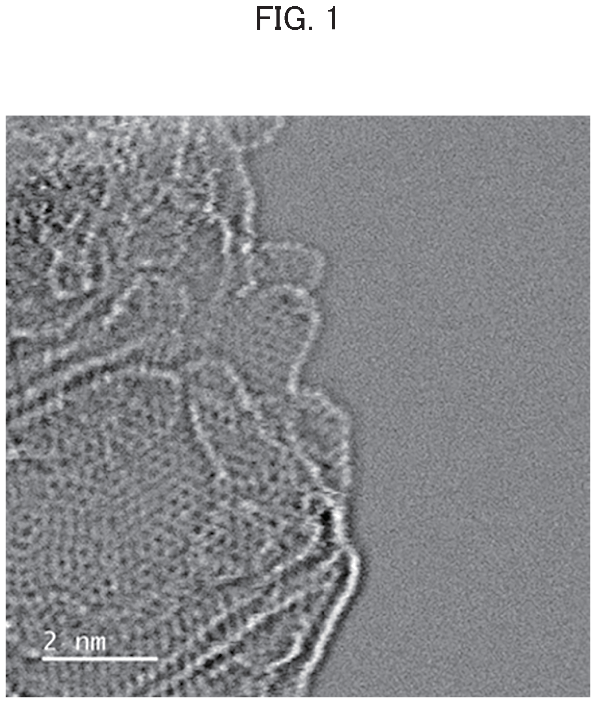

FIG. 1 shows an example of a TEM image of the carbon material according to the present embodiment, which was observed using a transmission electron microscope (TEM model: JEM-ARM300F manufactured by JEOL) at an acceleration voltage of 80 kV. Graphene is a sheet-like material composed of sp2-bonded carbon atoms, which may have a honeycomb-like hexagonal lattice structure as shown in FIG. 1, which has repeated carbon six-membered ring structures. The carbon material according to the present embodiment may be a graphene mesosponge (GMS) or a carbon mesosponge (CMS) as described later.

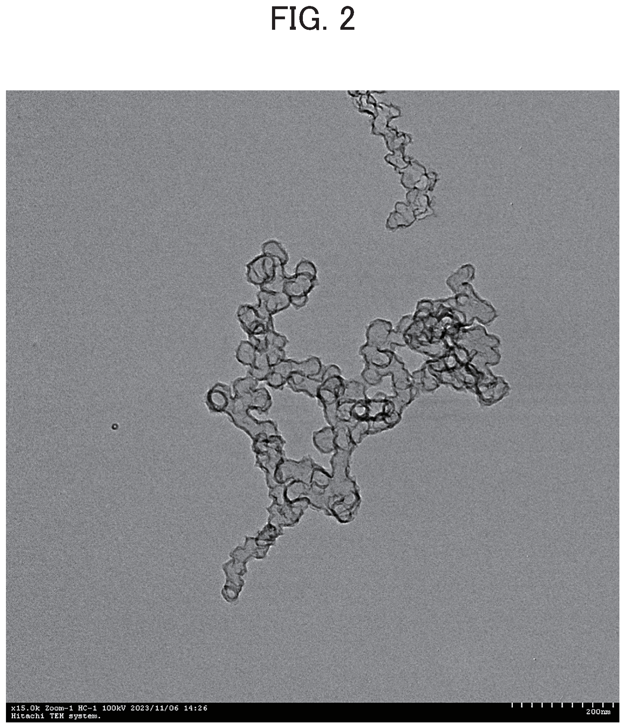

FIG. 2 shows a TEM image of an example of the carbon material according to the present embodiment, which was observed using a transmission electron microscope (TEM model: H-7650 manufactured by Hitachi High-Technologies) at an acceleration voltage of 100 kV and a magnification of 15,000×. The transmission image of the particle in FIG. 2 shows that the particle structure has a hollow interior space. The transmission image also shows that the carbon material according to the present embodiment has a combined structure in which particle structures having a pore and a carbonaceous shell surrounding the pore are complicatedly combined together through their shells.

The hollow particulate parts each having a surrounding wall may be provided with a constricted portion at the combined site where the hollow particulate parts (shells) are adjacent to each other. For example, two hollow particulate parts may be combined to form a peanut shell- or dumbbell-like shape. A plurality of such particulate parts may be combined to form a combined structure (shell), and such combined structures may be further combined together. FIG. 2 shows an example of the carbon material according to the present embodiment, which has a complicated structure including a combined structure with an indefinite shape.

As shown in FIG. 2, the carbon material according to the present embodiment preferably includes a plurality of hollow particulate parts (particle structures) combined together to form long chains extending in a plurality of directions and preferably has pores communicating with one another. The carbon material having such plural hollow particulate parts combined together to form long chains may have, for example, an in-the-ground ant nest-like continuous shape. In addition, such a shell more preferably has a plurality of branched structures. The hollow particulate parts combined together to form chains extending in a plurality of directions may form, for example, a ginger (edible vegetable) root-like shape. When formed in a long shape, the combined structure may have ring-shaped parts at one and another ends. Alternatively, when the combined structure has a plurality of extended branches, the branches may form a ring shape at their ends. The ends may or may not be combined to form such a ring shape.

In the combined structure, the pore (interior space) surrounded by the surrounding wall (shell) typically has a size (pore size) of 0.1 to 100 nm, preferably 1 to 100 nm or 1 to 80 nm, more preferably 5 to 50 nm. The combined structure (the shell having the pore) typically has a length of 0.01 to 100 µm, preferably 0.05 to 80 µm, more preferably 0.1 to 50 µm. In the combined structure, the hollow particulate parts may typically have an average particle size (average outer diameter) of 0.05 to 50 µm, preferably 0.05 µm or more and 6 µm or less, 0.1 to 10 µm, 0.1 µm or more and 5 µm or less, or 0.5 to 5 µm.

The size of the interior space (the pore size or inner diameter) may be determined as the mode pore size using, for example, the nitrogen adsorption-desorption measurement described later or any other method. The average size (average outer diameter) of the hollow particulate parts may be determined as the sum of the mode pore size (described later) and the double of the value calculated by multiplying the average number "n" of stacked layers by the average interplanar distance determined from the 002 diffraction line. The average particle size (average outer diameter) may also be determined by TEM image analysis.

The carbon material according to the present embodiment preferably includes a combined structure (which may also be referred to as the "structure") including an extended bead chain of combined hollow particulate parts including surrounding walls. Regarding the carbon material, the term "structure" is used to express carbon black having a complicated structure, which includes an agglomerate structure including primary particles combined together and having branched points. Specifically, a particularly preferred mode of the carbon material according to the present embodiment is considered to include hollow primary particles of highly conductive carbon black and an outer shell of a surrounding wall having a graphene crystal structure, which form an agglomerate having interior spaces communicating with one another.

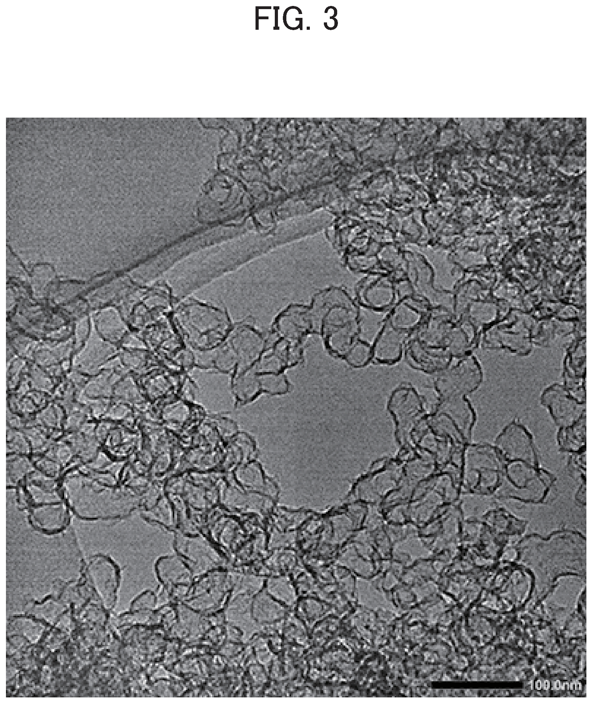

The carbon material according to the present embodiment may have an agglomerate structure including a plurality of combined structures (such as those described above) agglomerated or combined together or including a plurality of combined structures. FIG. 3 is a transmission electron microscope (TEM) image of an example of the carbon material according to an embodiment of the present invention, which was measured using a transmission electron microscope (TEM model: JEM-2100 Plus manufactured by JEOL) at an acceleration voltage of 100 kV and a magnification of 40,000×. The carbon material including such an agglomerate of continuous porous structures has voids (pores) between the combined structures and thus can have a further increased oil absorption.

### <Characteristics of the Carbon Material>

The carbon material according to the present embodiment has an oil absorption significantly higher than that of carbon black commonly used as an electrically-conductive material for lithium-ion secondary batteries or as a rubber reinforcing material. Thus, the carbon material according to the present embodiment can exhibit high electrical conductivity and high reinforcing performance. In particular, the carbon material having the combined structure or agglomerate structure as described above has not only interior spaces in the combined structure but also voids surrounded by the surrounding walls combined in the form of a bead chain and voids between the combined structures. The carbon material with such features can hold a very large amount of oil in those voids (pores).

The carbon material with such a high oil absorption generally has a large total surface area and high electron conductivity. Particularly when mixed with a polymer or other materials, the carbon material can easily form a composite material with high electrical conductivity. Also, when used as a battery material, the carbon material with such a high oil absorption can hold a large amount of an electrolyte solution, for example, which will allow stable supply of lithium ions and contribute to improvement in the fast discharge characteristics, charge-discharge characteristics, and capacity of lithium-ion secondary batteries.

Carbon materials having the combined structure as described above can exhibit a large elastic deformation energy, namely, under weak stress, they can recover without undergoing plastic deformation. Carbon materials typically consist of an elastically deformable structure and a plastically deformable structure. The plastically deformable structure has high strength against stress, but once deformed, it cannot recover even after the load is removed. A particularly preferred mode of the carbon material according to the present embodiment has an elastically deformable portion composed mainly of graphene, which may provide favorable properties against stress deformation. On the other hand, some materials having a large number of graphene layers, such as graphite, can be elastically deformable within a certain range of stress, but beyond a certain threshold of stress, they can undergo plastic deformation at once, which may lead to destruction of their particle structure or combined structure. The degree of elastic or plastic deformation of the carbon material can be measured by an ultra-micro load-unload test.

### <Crystal Structure of Graphene>

The carbon material according to the present embodiment preferably has a surrounding wall of a graphene crystal structure as described above. Such a crystal structure can also be confirmed from, for example, the Raman spectrum of the carbon material having a ratio IG/I2D of G band intensity to 2D band intensity of 0.2 or more.

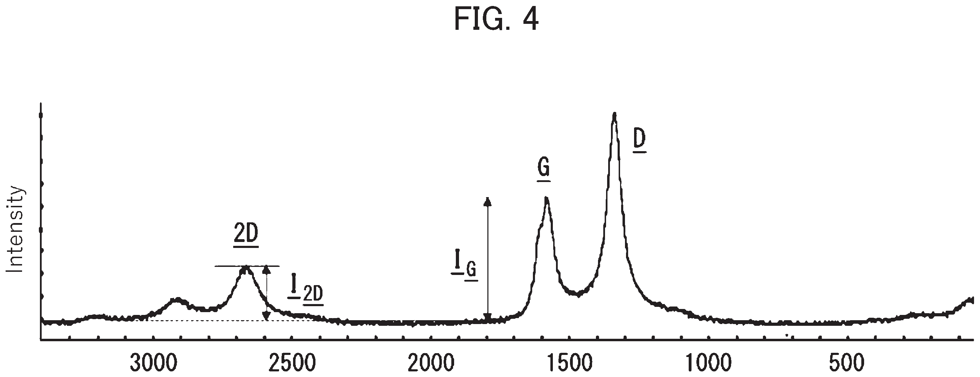

FIG. 4 shows an example of the measured Raman spectrum of the carbon material according to the present embodiment. The Raman spectrum has a peak at or around a wavenumber of 1,593 cm⁻¹, which is called the G band and indicates the sp2 bond (aromatic ring C=C stretching vibration) in the carbon material. The Raman spectrum has another peak at or around a wavenumber of 1,356 cm⁻¹, which is called the D band and indicates the sp3 bond (C-H stretching vibration) in the carbon material. The D band intensity increases as the sp2 bonds in the carbon six-membered ring structures of the carbonaceous layers break and turn into the sp3 bonds. The Raman spectrum has a further peak at or around a wavenumber of 2,680 cm⁻¹, which is called the 2D band and indicates secondary phonon scattering (C-H stretching vibration). The 2D band indicates the number of stacked graphene layers in the carbon material.

The intensity ratio I_{G}/I_{2D} of G band to 2D band of carbon materials is considered to reflect the state of graphene layer stacking (D. Graf, et al., NANO LETTERS, 7, 238-242; (2007)). Thus, hereinafter I_{G}/I_{2D} may be referred to as the "laminate index". The literature states that a (G/2D) intensity ratio of 0.2 indicates a single graphene layer.

The carbon material according to the present embodiment preferably has a ratio (I_{G}/I_{2D}) of G band intensity to 2D band intensity of 0.4 to 5.0, more preferably 1.00 to 4.50, 1.10 to 4.00, 1.20 to 3.57, 1.30 to 3.00, 1.40 to 2.50, or 1.43 to 2.08. The carbon material with an I_{G}/I_{2D} ratio in such a range has highly-balanced strength characteristics and elastic deformability for the retention of the hollow structure (interior space) in the carbon material. For example, when used as an electrically conductive material for lithium-ion secondary batteries, the carbon material with an I_{G}/I_{2D} ratio in such a range can provide highly improved fast discharge characteristics, capacity characteristics, durability, and other desired characteristics.

Moreover, the carbon material according to the present embodiment preferably has a ratio (I_{D}/I_{G}) of D band intensity to G band intensity of 0.1 to 10, more preferably 0.5 to 5, even more preferably 1 to 3, furthermore preferably 1.2 to 2.5, still more preferably 1.4 to 2. The carbon material with an I_{D}/I_{G} ratio in such a range can have sp2 and sp3 orbitals arranged in an optimal configuration and have highly balanced electron- and ion-conducting paths. For example, the carbon material with an I_{D}/I_{G} ratio in such a range can provide lithium-ion secondary batteries with highly increased fast discharge characteristics, capacity characteristics, and charge-discharge characteristics. Hereinafter, I_{D}/I_{G} may be referred to as the "amorphous index".

In addition, the carbon material according to the present embodiment preferably has a crystallite size Lc(002) in a c-axis direction of 0.1 to 5 nm as measured by X-ray diffraction (XRD). The degree of crystallinity of the carbon material can be evaluated using the Lc(002) of the [002] plane. The carbon material with an Lc(002) of 0.1 to 5 nm tends to have large mesopores and macropores. The Lc(002) may be 0.3 nm or more, 0.5 nm or more, 1.0 nm or more, or 1.1 nm and may be 3 nm or less, 2.5 nm or less, 2.0 nm or less, 1.9 nm or less, 1.5 nm or less, 1.25 nm or less, or 1.21 nm or less. The Lc(002) is more preferably 0.3 to 3 nm, 0.5 to 2.5 nm, 1.0 to 2.0 nm, or 1.1 to 1.9 nm.

When measured by X-ray diffraction (XRD), the carbon material according to the present embodiment may have any crystallite size La(10) in the a-axis direction of the [10] plane. The La(10) is preferably 0.1 nm or more, 0.5 nm or more, 1.0 nm or more, 1.5 nm or more, or 1.8 nm or more. The La(10) preferably has an upper limit of 10 nm or less, 5.0 nm or less, 4.5 nm or less, 4.0 nm or less, or 3.8 nm or less.

The carbon material according to the present embodiment preferably has an interplanar distance d002 between [002] planes of 3 to 5 Å as measured by X-ray diffraction (XRD). The interplanar distance d002 is more preferably 3.3 to 4.5 Å, even more preferably 3.3 to 4.0 Å, furthermore preferably 3.3 to 3.9 Å, still more preferably 3.3 to 3.8 Å.

### <Surface State of Carbon Material>

The carbon material according to the present embodiment may have any suitable surface state. Preferably, the carbon material according to the present embodiment has a large surface area for high oil absorption. The carbon material according to the present embodiment preferably has a large number of voids of various sizes. Hereinafter, such voids may be collectively referred to as "pores". The term "pores" is intended to include not only pores in the combined structure of the porous carbon material described above but also, for example, interior spaces in the combined structure.

### (Specific Surface Area)

The carbon material according to the present embodiment preferably has a BET specific surface area of 100 to 2,700 m²/g, 300 to 2,500 m²/g, 500 to 2,000 m²/g, 600 to 1,800 m²/g, or 800 to 1,200 m²/g, which may be calculated from the nitrogen adsorption according to JIS Z 8830. Since the theoretical specific surface area for single-layer graphene is calculated to be 2,627 m²/g, the carbon material having a specific surface area close to the theoretical value can be considered ideal as an electrically-conductive carbon material. For example, the carbon material according to the present embodiment preferably has a BET specific surface area of 100 to 2,700 m²/g (it may be over the theoretical value in the presence of pores) to achieve highly increased oil absorption and electrical conductivity.

### (Pores)

The carbon material according to the present embodiment preferably has pores of various sizes. The International Union of Pure and Applied Chemistry (IUPAC) defines pores with diameters of less than 2 nm as micropores, pores with diameters of 2 to 50 nm as mesopores, and pores with diameters of more than 50 nm as macropores. In a particularly preferred mode of the carbon material according to the present embodiment, interior spaces in the combined structure including a bead chain of combined hollow particulate parts may correspond to mesopores; spaces in the branched part of the combined structure, external compartmental spaces in an agglomerate of combined structures, or compartmental voids formed in the external space by a single combined structure extended in a ring shape may correspond to macropores; and gaps between surrounding carbon walls at complicatedly branched or significantly dented portions of the combined structure or through holes caused by defects and so on in the surrounding walls may correspond to micropores. It should be noted, however, that the carbon material according to the present embodiment may have any other surface state.

The carbon material according to the present embodiment may preferably have an average pore size of 1 to 500 nm. Alternatively, the carbon material according to the present embodiment preferably has an average pore size of 5 to 100 nm, 10 to 75 nm, 12 to 60 nm, 15 to 50 nm, or 20 to 40 nm. The carbon material with an average pore size in such a range can have a higher oil absorption and higher ion or electron conductivity. The pore size and pore volume of the carbon material can be determined by, for example, analysis of adsorption behavior of various gases. Moreover, information such as bulk density and spatial volume may also be obtained using void volume measurement (through powder compression for calculation), mercury porosimeters, and so on.

The carbon material according to the present embodiment preferably has a pore size distribution with a mode pore size (M) of 1 to 100 nm, which may be determined to be the peak top value in its pore size distribution curve. Alternatively, the carbon material according to the present embodiment preferably has a mode pore size (M) of 5 to 100 nm, 10 to 50 nm, 15 to 40 nm, or 15 to 30 nm. The carbon material having a pore size distribution with a peak top pore size in such a range can have higher oil absorption and higher ion or electron conductivity.

The carbon material according to the present embodiment preferably has a total pore volume of 0.1 to 20 cc/g as measured by, for example, nitrogen adsorption-desorption measurement. When used as a battery material, for example, the carbon material with a total pore volume of 0.1 cc/g or more facilitates to hold a sufficient amount of an electrolyte solution. The total pore volume may be 1 cc/g or more, 1.5 cc/g or more, 2 cc/g or more, or 2.95 cc/g or more. The carbon material with a total pore volume of 20 cc/g or less can have a porous structure framework (e.g., the combined structure described above) with high strength and tends to maintain its shape.

As used herein, the term "total pore volume" is intended to include not only the volume of pores but also the volume of voids, such as interior spaces of the combined structure and external spaces surrounded by the surrounding walls (all types of pores including micropores, mesopores, and macropores). The carbon material according to the present embodiment may also have a total pore volume of 1 to 15 cc/g, 2 to 10 cc/g, 2 to 8 cc/g, 2.95 to 6.1 cc/g, or 2.95 to 5.7 cc/g.

The carbon material according to the present embodiment preferably has a micropore volume of, for example, 5 cc/g or less, 2 cc/g or less, 1 cc/g or less, 0.5 cc/g or less, or 0.4 cc/g or less, which corresponds to the volume of pores with diameters of less than 2 nm. The carbon material according to the present embodiment also preferably has a micropore volume of 0.01 cc/g or more, 0.05 cc/g or more, 0.1 cc/g or more, 0.2 cc/g or more, or 0.3 cc/g or more. The carbon material having too large micropore volume may have low ion conductivity, and the carbon material having too small micropore volume may cause inferior strength characteristics.

In the carbon material according to the present embodiment, the volume of micropores (i.e., pores with diameters of less than 2 nm) may make up any percentage of the total pore volume. For example, the percentage of the micropore volume in the total pore volume is preferably 20% or less, 15% or less, 12% or less, 10% or less, or 9% or less. It preferably has a lower limit of 5% or more. The carbon material with too high micropore volume percentage may cause low ion conductivity. The carbon material with too low micropore volume percentage may cause low strength characteristics.

The carbon material according to the present embodiment may have any volume of mesopores (i.e., pores with diameters of 2 to 50 nm). For example, the carbon material according to the present embodiment may have a mesopore volume of 0.1 cc/g or more, 0.5 cc/g or more, 1 cc/g or more, 1.5 cc/g or more, or 2 cc/g or more. The carbon material according to the present embodiment may have a mesopore volume of 15 cc/g or less, 10 cc/g or less, 5 cc/g or less, 4 cc/g or less, or 3.5 cc/g or less. The carbon material with a mesopore volume in such a range can achieve highly balanced ion conductivity and strength characteristics, and is preferred thereby.

In the carbon material according to the present embodiment, the volume of mesopores (i.e., pores with diameters of 2 to 50 nm) may make up any percentage of the total pore volume. For example, the percentage of the mesopore volume in the total pore volume may be 10% or more, 20% or more, 30% or more, 40% or more, or 50% or more. For example, the percentage of the mesopore volume in the total pore volume may be 90% or less, 85% or less, 80% or less, 75% or less, or 70% or less. The carbon material with a mesopore volume percentage in such a range can have particle structures with appropriate strength, which allows the particles to stabilize the structures and to retain the shape. The carbon material with such features facilitates to maintain good balance between electron conductivity and the ability to supply ions from the pores.

The carbon material according to the present embodiment may have any volume of macropores (i.e., pores with diameters more than 50 nm). For example, the carbon material according to the present embodiment may have a macropore volume of 0.01 cc/g or more, 0.05 cc/g or more, 0.1 cc/g or more, 0.48 cc/g or more, or 1 cc/g or more. For example, the carbon material according to the present embodiment may have a macropore volume of 15 cc/g or less, 10 cc/g or less, 5 cc/g or less, 3 cc/g or less, or 2.57 cc/g or less. The carbon material with a macropore volume in such a range can have particle structures with appropriate strength, which allows the particles to stabilize the structures and to retain the shape. The carbon material with such features facilitates to maintain good balance between electron conductivity and the ability to supply ions from the pores.

In the carbon material according to the present embodiment, the volume of macropores (i.e., pores with diameters of more than 50 nm) may make up any percentage of the total pore volume. The percentage of the macropore volume in the total pore volume is preferably 5% or more. The carbon material with a macropore volume percentage of 5% or more can have higher ion conductivity. The percentage of the macropore volume in the total pore volume may be 10% or more, 15% or more, 20% or more, or 25% or more. It may also be 80% or less, 70% or less, 60% or less, 50% or less, or 45% or less. The carbon material with a macropore volume percentage being such a value or less tends to exhibit higher strength. For example, the carbon material may have a macropore volume percentage of 5 to 80%, 10 to 70%, 15 to 60%, 20 to 50%, or 25 to 45%.

### <Particle Size of the Carbon Material>

The carbon material according to the present embodiment may have any particle size (particle diameter), any average particle size, or any particle size distribution. As used herein, unless otherwise stated, the term "particle size" means the longitudinal size or longest size of the agglomerate (what is called the secondary agglomerate of carbon material particles). The particle size distribution curve of the carbon material may be obtained through measurement using a laser diffraction-scattering particle size distribution analyzer, such as MT3300EX II manufactured by MicrotracBEL. For example, the particle size distribution measurement may also be performed after the unground material is immersed in a solvent for 9 minutes. The immersion treatment can partially or completely dissociate agglomerates with low cohesion. Thus, the resulting particle size distribution curve can be used to estimate the degree of cohesion in the combined structure.

As a non-limiting example, the carbon material according to the present embodiment preferably has a median diameter D50 of 1 to 100 µm. The median diameter is the particle size at which 50% of the particles are smaller than that size in the particle size distribution curve. The carbon material with a median diameter D50 in such a range can have higher electron conductivity and higher ion conductivity. The carbon material may have a median diameter D50 of 5 to 90 µm, 10 to 80 µm, 15 to 60 µm, 20 to 50 µm, 25 to 45 µm, or 30 to 40 µm.

The particle diameter D10 of the carbon material according to the present embodiment may be any value. The particle diameter D10 is the particle size at which 10% of the particles are smaller than that size in the particle size distribution curve. For example, the particle diameter D10 of the carbon material may be 0.1 to 100 µm, 0.5 to 50 µm, 1 to 50 µm, 5 to 30 µm, or 10 to 15 µm.

The particle diameter D90 of the carbon material according to the present embodiment may be any value. The particle diameter D90 is the particle size at which 90% of the particles are smaller than that size in the particle size distribution curve. For example, the particle diameter D90 of the carbon material may be 5 to 250 µm, 10 to 150 µm, 20 to 100 µm, 30 to 70 µm, 45 to 65 µm, 45 to 55 µm, or 40 to 60 µm. The carbon material with D90 in such a range can have higher electrical conductivity.

The carbon material according to the present embodiment may have any ratio of D90 to D10 (D90/D10 ratio). The carbon material according to the present embodiment preferably has a D90/D10 ratio of 100 or less, 50 or less, 10 or less, or 5 or less. The carbon material with too high D90/D10 ratio may accelerate agglomeration, which may tend to lead to unsuccessful dispersion and to provide lithium-ion secondary batteries with insufficient electrical conductivity.

The carbon material according to the present embodiment may have any ratio of D90 to mode pore size M (D90/M ratio). The D90/M ratio can be calculated by a process including: multiplying D90 in µm by 1,000 to convert it to a value in nm; and dividing the value in nm by the mode pore size M in nm. For example, the D90/M ratio may be 50,000 or less, 20,000 or less, 10,000 or less, 6,000 or less, 5,000 or less, or 4,000 or less. In particular, the D90/M ratio is preferably 10,000 or less. The carbon material with too high D90/M ratio may have high agglomerating properties and low dispersibility to bring lithium-ion secondary batteries with insufficient electrical conductivity.

The carbon material according to the present embodiment may have a relatively low apparent or bulk density, which is advantageous for high oil absorption or due to the complicated structure as described above.

The apparent density of the carbon material according to the present embodiment is preferably, but not limited to, 2 g/cc or less. Alternatively, the apparent density of the carbon material according to the present embodiment is preferably 1.5 g/cc or less, 1 g/cc or less, 0.5 g/cc or less, or 0.3 g/cc or less, and is preferably 0.05 g/cc or more, 0.1 g/cc or more, or 0.15 g/cc or more. The carbon material with an apparent density in such a range tends to retain the hollow structure and can be more suitable for use in batteries.

The apparent density can be calculated using, for example, the total pore volume and the true density according to the following equation: 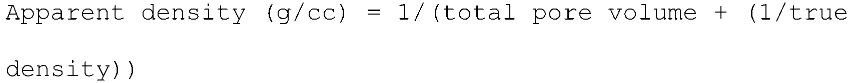 Apparent density (g/cc) = 1/(total pore volume + (1/true density)) In addition, the total pore volume (cc/g) may be the value calculated at a relative pressure of 0.99, and the true density may be 2.2 g/cc (that of graphite).

The carbon material according to the present embodiment preferably has a bulk density of 0.01 to 1,000 g/L, 0.1 to 100 g/L, 0.5 to 50 g/L, or 1 to 25 g/L. The carbon material with a bulk density in such a range tends to have higher oil absorption and electrical conductivity and facilitates permeation of an electrolyte solution, and is preferred thereby.

As used herein, the term "bulk density" refers to the mass per unit volume of the carbon material packed in a vessel with a constant volume under constant conditions. For example, the bulk density can be measured according to JIS K 6219-2.

The carbon material according to the present embodiment preferably has a number density of 5 × 10¹⁴ to 1 × 10²⁰ carbon materials/g, 1 × 10¹⁶ to 1 × 10¹⁹ carbon materials/g, 5 × 10¹⁶ to 5 × 10¹⁸ carbon materials/g, 1 × 10¹⁷ to 1 × 10¹⁸ carbon materials/g, or 3 × 10¹⁷ to 7×10¹⁷ carbon materials/g, which may be calculated by the method described below. The carbon material with a number density in such a range can have an optimal level of oil absorption, and is preferred thereby.

The number density Nₚ (carbon materials/g) can be calculated from the specific surface area SA of the primary particles and the inner and outer diameters D₀ and D₁ of the primary particles using the following equation: ${N}_{p} = SA / \left({{πD}_{1}}^{2}+{{πD}_{0}}^{2}\right)$ SA may be the BET specific surface area described above, and D₀ may be the mode pore size described above. D₁ can be calculated as the sum of the mode diameter and the double of the product obtained by multiplying D₀ by the average number "n" of stacked layers and the (002) interplanar distance. Alternatively, D₁ may be determined through TEM image analysis. For solid carbon materials, the calculation may be performed using D₀ = 0. For example, for DENKA BLACK Li-100 (known in the art), the calculation may be performed using an average particle size of 35 µm as the particle outer diameter (D₁) and using D₀ = 0.

### (Graphene Mesosponge)

The carbon material according to the present embodiment may be a graphene mesosponge (GMS). The term "graphene mesosponge" refers to a porous or perforated carbon material having a graphene crystal structure. The graphene mesosponge has a relatively large specific surface area and thus tends to have a high oil absorption. Specifically, the GMS having the combined structure described above tends to have an extremely high oil absorption. The average number N of stacked graphene layers in the graphene mesosponge is typically 0.9 to 5.0, preferably 1.0 to 4.0, more preferably 1.5 to 2.0. The porous carbon material with a lower number of stacked graphene crystal structure layers will have a larger specific surface area. The GMS also exhibits a particularly large elastic deformation energy, and under weak stress, it tends to recover without undergoing plastic deformation.

### (Carbon Mesosponge)

The carbon material according to the present embodiment may also be a carbon mesosponge (CMS). The CMS is a porous carbon material similar to GMS, but it has no or little graphene crystal structure in the surrounding wall of the sponge. Therefore, the CMS can have an oil absorption as high as that of GMS, although it does not always have electrical conductivity as high as that of GMS.

### <Components in the Carbon Material>

The carbon material according to the present embodiment preferably has a carbon content of 95 mass% or more, 97 mass% or more, 98 mass% or more, 99 mass% or more, or 99.3 mass% or more.

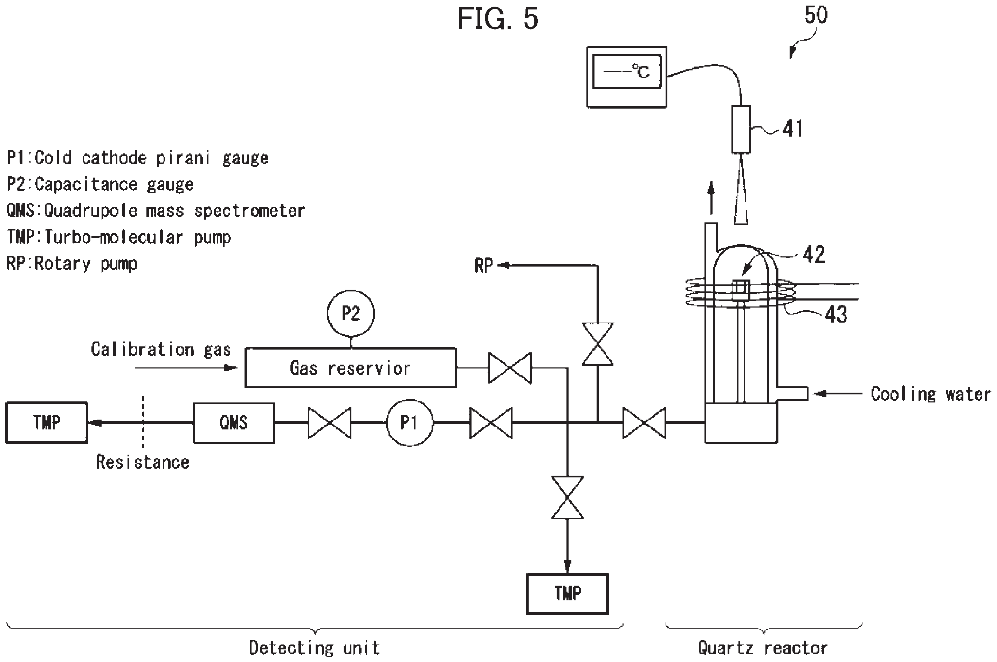

The carbon content can be determined by temperature-programmed desorption mass spectrometry (TPD-MS) using, for example, an ultra-high-sensitivity vacuum temperature-programmed desorption mass spectrometer 50 shown in FIG. 5 (developed at Tohoku University; see T. Ishii et al., CARBON 80, 2014, 135-145). The temperature-programmed desorption mass spectrometer 50 includes a quartz reactor including a radiation thermometer 41, a sample holder 42, and a highfrequency induction coil 43, and includes a detection unit connected to the quartz reactor. The detection unit includes, for example, a gas storage vessel, a turbo molecular pump TMP, a rotary pump RP, a cold cathode Pirani gauge P1, and a capacitance gauge P2.

The ultra-high-sensitivity vacuum temperature-programmed desorption mass spectrometer 50 can also perform accurate qualitative and quantitative analysis of oxygen-containing functional groups and hydrogen-terminated edge sites. Specifically, accurate qualitative and quantitative analysis of oxygen-containing functional groups and hydrogen-terminated edge sites can be performed by a process including: placing 1 to 3 mg of each carbon material sample in a graphite sample stage; heating the sample to 1,800°C at a rate of temperature rise of 10°C/minute under vacuum; and analyzing gases released during the heating using the mass spectrometer.

The carbon material according to the present embodiment preferably has an oxygen content of 5 mass% or less, 3 mass% or less, 2 mass% or less, 1 mass% or less, or 0.6 mass% or less, for example, which can be calculated from the amounts of released H₂O, CO, and CO₂ measured by the temperature-programed desorption mass spectrometry (TPD-MS). The carbon material with an oxygen content in such a range can be used to produce lithium-ion secondary batteries with higher stability and higher performance.

For example, for high performance and long life of lithium-ion batteries, the battery reaction should proceed with high efficiency without any side reaction-induced reduction in efficiency. This requires the carbon material in the electrode to have electrochemical stability, specifically oxidation resistance and corrosion resistance. Electrochemically induced side reactions such as oxidation are considered to occur from oxygen-containing functional groups or edge planes in the carbon material. To improve the oxidation resistance of the carbon material, it is effective to reduce the number of oxygen-containing functional groups and the number of edge planes with low oxidation resistance.

The oxygen content measurement by TPD-MS described above includes measuring the amounts of H₂, H₂O, CO, and CO₂ released from the carbon material, in which these gases are derived from oxygen-containing functional groups at edge ends of the carbon material, such as hydroxyl groups (including phenol groups), carbonyl groups (including quinones), ethers, acid anhydrides, carboxyl groups, and lactones. Therefore, a large number of oxygen-containing functional groups in the carbon material (namely, a large number of edge sites and oxygen-containing functional groups in the carbon material structure) may cause a reduction in durability and may hinder the improvement of the life and performance of lithium-ion secondary batteries. The number of oxygen-containing functional groups and edge sites in the carbon material can be controlled by controlling CVD conditions or heat treatment temperature.

The carbon material according to the present embodiment preferably has a ratio of oxygen content to carbon content (O/C ratio) of 1 or less, 0.5 or less, 0.1 or less, 0.05 or less, or 0.01 or less. The carbon material with an O/C ratio in such a range facilitates to provide lithium-ion secondary batteries with a long life and high performance.

The carbon material according to the present embodiment preferably has a gas content of 5,000 µmol/g or less, 3,000 µmol/g or less, 1,000 µmol/g or less, 750 µmol/g or less, or 500 µmol/g or less. For example, the gas content may be measured by TPD-MS. The carbon material with a releasable gas content in such a range can contribute to increase the life and performance of lithium-ion secondary batteries.

The carbon material according to the present embodiment preferably has an edge site content of 500 m²/g or less, 300 m²/g or less, 100 m²/g or less, 50 m²/g or less, or 30 m²/g or less, for example, which can be calculated from the gas content determined by TPD-MS measurement. Alternatively, the carbon material according to the present embodiment preferably has an edge site content of 750 µmol/g or less or 500 µmol/g or less. The carbon material with an edge site content in such a range can have high durability and facilitate to provide lithium-ion secondary batteries with high stability and high performance.

The carbon material according to the present embodiment preferably has an ash content of 10,000 ppm or less, 5,000 ppm or less, 4,000 ppm or less, 3,500 ppm or less, or 3,000 ppm or less. The carbon material with an ash content in such a range can hold an electrolyte solution more stably to provide lithium-ion secondary batteries with higher durability and performance.

### <Physical Properties of the Carbon Material>

The carbon material according to the present embodiment, which has a high oil absorption, often exhibits high electrical conductivity. In particular, the combined structure described above, specifically GMS has a graphene structure spreading in the in-plane direction and thus tends to exhibit particularly high electrical conductivity. Therefore, the carbon material according to the present embodiment is useful for battery electrodes and other electrodes.

For example, carbon materials for use in lithium-ion battery electrodes should preferably have high electrical conductivity. The electrical conductivity of carbon arises from transport of π-electrons. Thus, carbon materials for forming ideal conductive paths in electrodes should preferably have carbon atoms bonded in the in-plane direction to form a single-layer graphene network. In some cases, only a small amount of an electrically conductive material, such as a carbon material, filled in a non-electrically-conductive material, such as a positive electrode material, may hardly provide electrical conductivity for the electrode. As the filling rate exceeds a certain level, the electrically-conductive material will form paths to sharply increase the electron conductivity in the compound and then provide a constant level of electrical conductivity. The electrically-conductive material with a lower threshold filling rate, at which the electron conductivity starts to increase sharply, can be considered more appropriate. The combined structure described above can have highly balanced in-plane electrical conductivity and path electrical conductivity, for example, and can exhibit high electrical conductivity thereby.

The electrical conductivity of the carbon material can be evaluated, for example, by measuring the electrical conductivity of laterally-constrained and uniaxially-compressed powder as shown below. In the measurement method, a dry powder sample is filled into a cylindrical vessel consisting of an insulating cylinder and a negative electrode. A positive electrode is inserted into the insulating cylindrical vessel filled with the sample. The sample sandwiched between the positive and negative electrodes is mounted on a force gauge stand. A spring force gauge on the force gauge stand is lowered to apply force to and compress the sample in the cylindrical vessel. The compressing force and the level of the sample are measured using an end-measuring machine while the resistance of the sample is measured using a digital multimeter connected to the positive and negative electrodes. The electrical conductivity of the powder sample during the compression is determined from the measured resistance and the cross-sectional area and height of the packed sample.

The carbon material according to the present embodiment preferably has an electrical conductivity of 1 to 100 S/cm, 5 to 70 S/cm, 10 to 50 S/cm, or 20 to 30 S/cm as measured under a force of 10 MPa. The electrical conductivity of the carbon material can be calculated as the reciprocal of its electrical resistivity. For example, the electrical resistivity of the carbon material may be measured according to JIS K 1469.

The carbon material according to the present embodiment preferably has a pH of 5 to 10, 5.5 to 9.5, 6 to 9, 6.5 to 8.5, or 7 to 8. The carbon material with a pH in such a range can have higher stability, and is preferred thereby.

The carbon material according to the present embodiment preferably has a combustion temperature of 300°C or more, 400°C or more, 450°C or more, 500°C or more, 550°C or more, or 600°C or more. The combustion temperature test for the carbon material may be performed as a simplified corrosion resistance test. The carbon material with a higher combustion temperature tends to have higher electrochemical stability in electrodes.

The carbon material according to the present embodiment, which has a high oil absorption, is highly effective in reinforcing polymers and other materials. Also, when used as an electrode material for lithium-ion batteries and so on, the carbon material according to the present embodiment can absorb and hold an electrolyte solution containing dissolved lithium ions and thus can have a high ability to supply ions during the battery reaction. In particular, the carbon material having a graphene crystal structure has high electron conductivity and thus can serve as a favorable aid for secondary battery reaction. Therefore, the carbon material according to the present embodiment is suitable for use in secondary batteries.

### <<Method for Producing the Carbon Material>>

The carbon material described above may be produced, for example, by the production methods described below. Hereinafter, methods for producing the carbon material of the present invention will be described in detail with reference to typical embodiments.

According to an aspect of the present invention, a method for producing a carbon material includes: providing a carbonaceous layer-coated template material that includes a template material of an agglomerate of primary particles agglomerated in a bead-chain-like configuration; and a carbonaceous layer provided to cover a surface of the template material; and removing the template material from the carbonaceous layer-coated template material to form a carbon material precursor. The production method successfully produces a carbon material for forming, for example, the carbon mesosponge (CMS) described above or CMS agglomerates.

According to another aspect of the present invention, a method for producing the carbon material includes: providing a carbonaceous layer-coated template material that includes a template material of an agglomerate of primary particles agglomerated in a bead-chain-like configuration; and a carbonaceous layer provided to cover a surface of the template material; removing the template material from the carbonaceous layer-coated template material by dissolution using acid treatment to form a carbon material precursor; and heating the carbon material precursor to produce a carbon material that includes one or more combined structures each having an extended shape with pores, wherein the one or more combined structures each have hollow particulate parts combined in a bead-chain-like configuration, and the hollow particulate parts each include a surrounding wall that forms a comparted interior space of each of the hollow particulate parts and is made of a graphene structure-containing carbonaceous material. The production method successfully produces the combined structure for forming, for example, the graphene mesosponge (GMS) described above or GMS agglomerates.

The carbon material production method according to the present embodiment may include forming a carbonaceous layer on the surface of the template material as a preliminary step. More specifically, the carbon material production method according to the present embodiment may include the following steps before the removing step: placing the template material in a reaction vessel; heating the interior of the reaction vessel; introducing a carbon-containing raw material gas into the reaction vessel; and chemical vapor deposition (CVD) of depositing a product of thermal decomposition of the raw material gas on the surface of the template material to form the carbonaceous layer-coated template material.

Specifically, the carbon material production method according to the present embodiment may include placing the template material in a reaction vessel; heating the interior of the reaction vessel; introducing a carbon-containing raw material gas into the reaction vessel; chemical vapor deposition (CVD) of depositing a product of thermal decomposition of the raw material gas on the surface of the template material to form the carbonaceous layer-coated template material; dissolving and removing the template material from the carbonaceous layer-coated template material by acid treatment to form the carbon material precursor; and heating the carbon material precursor to produce a carbon material that includes one or more combined structures each having pores and hollow particulate parts combined in a bead-chain-like configuration, and the hollow particulate parts each comprise a surrounding wall that forms a comparted interior space of the hollow particulate parts and is made of a graphene structure-containing carbonaceous material.

The production method including those steps can efficiently produce a carbon material having an oil absorption of 550 mL/100 g or more, specifically a carbon material having a combined structure including an extended bead chain of hollow particulate parts. Hereinafter, each of the steps according to the present embodiment and raw materials to be used will be described in detail.

### <Process for Producing Carbonaceous Layer-Coated Template Material>

The carbonaceous layer-coated template material may be produced by a process including: placing a template material in a reaction vessel; heating the template material; and then introducing a carbon-containing raw material gas into the reaction vessel, for example. For example, CVD technique may be performed to deposit a product of thermal decomposition of the carbon-containing raw material gas on the surface of the template material so that a carbonaceous layer-coated template material is produced, which includes the template material with its surface coated with a carbonaceous layer(s). Such a technique may be referred to as template chemical vapor deposition technique (T-CVD technique).

### (Template Material)

In the present embodiment, the template material is preferably such that it allows the production of a carbon material having a complicated and elongated higher-order structure having interior spaces communicating with one another. For example, the template material may have an agglomerate structure including a chain of primary particles and having branched structures.

In the present embodiment, the template material preferably has a primary particle size of 1 to 150 nm, more preferably 5 to 100 nm, even more preferably 10 to 60 nm, furthermore preferably 15 to 50 nm, still more preferably 20 to 40 nm. The template material with a primary particle size in such a range facilitates formation of, for example, a combined structure with a large mesopore volume and allows the production of a carbon material to have a significantly increased oil absorption, and is preferred thereby. In addition, the template material with a primary particle size in such a range is easy to handle and highly permeable to the raw material gas (the carbon source of the carbonaceous layer) and thus facilitates uniform carbon coating.

In the present embodiment, the template material typically has a BET specific surface area of 1 to 1,000 m²/g, preferably 10 to 500 m²/g, more preferably 20 to 200 m²/g, even more preferably 40 to 160 m²/g, furthermore preferably 50 to 120 m²/g. The template material with a BET specific surface area in such a range allows the production of a carbon material with significantly increased oil absorption and mesopore volume, and is preferred thereby.

The carbon material as produced has a specific surface area depending on that of the template. The ratio of particle surface area to particle volume increases with decreasing particle size, and the surface area per volume (namely, the surface area per unit mass) increases with decreasing particle size. Thus, using the template material with a smaller primary particle size can produce a carbon material with a larger specific surface area.

In the present embodiment, the template material has an agglomerate structure including a bead chain of the primary particles and having branched structures. Such a complicated agglomerate structure is similar to carbon black structure.

In the present embodiment, for example, the template material (agglomerate) may have an average primary particle size of 1 to 100 nm, 2 to 50 nm, 4 to 50 nm, or 3 to 30 nm. The agglomerate structure typically has a length of 0.01 to 100 µm, preferably 0.05 to 10 µm, more preferably 0.1 to 5 µm. The agglomerate structure typically has an average particle size of 0.05 to 10 µm, preferably 0.1 to 5 µm.

In the present embodiment, the template material typically has a bulk density of 0.1 to 500 g/L, preferably 0.5 to 250 g/L, more preferably 1 to 200 g/L, even more preferably 10 to 100 g/L, furthermore preferably 30 to 70 g/L. Using the template material with a bulk density in such a range facilitate to produce a carbon material with high electrical conductivity and significantly increased oil absorption and mesopore volume, and is preferred thereby.

In the present embodiment, the template material is preferably basic or acidic. The basic compound for the template material may be, for example, magnesium oxide or calcium carbonate. The acidic compound for the template material may be, for example, aluminum oxide or a silanol moiety-containing silica compound. The acidic pH, for example, in 4% water is typically 7 or less, preferably 6.5 or less, more preferably 6 or less, even more preferably 5.5 or less, furthermore preferably 5 or less. The acidic pH typically has a lower limit of 1 or more, preferably 2 or more, more preferably 3 or more, even more preferably 3.5 or more, furthermore preferably 4 or more.

In the present embodiment, the template material may include any type of an agglomerate structure including a bead chain of primary particles and having branched structures. Preferably, the template material includes a compound capable of catalyzing the carbon deposition reaction. The template material may include particles of a metal compound, a metalloid compound, or a non-metal compound. The template material preferably includes ceramic particles and/or carbonate salt particles.

For example, the ceramic particles may include particles of glass, cement, or fine ceramics, and more specifically include particles of silica (silicon dioxide), alumina, or magnesia (magnesium oxide).

In this regard, alumina has acidic sites on its surface and can function as a solid acid. Upon contact with hydrocarbons, acidic sites of such a solid acid can catalyze the reforming reaction of the hydrocarbons. Upon contact with hydrocarbons, the acidic sites can cause carbon deposition reaction so that carbon can be deposited on the surface of the solid acid. Such a function may be referred to as the solid acid catalyst function, which allows raw material gas to cause decomposition, polymerization of carbon radical produced by decomposition, and deposition of carbonaceous layer even at a temperature equal to or lower than the decomposition temperature of the raw material gas used as the source of the carbonaceous layer.

The carbonate salt particles are typically, but not limited to, particles of calcium carbonate, magnesium carbonate, dolomite, barium carbonate, lithium carbonate, sodium carbonate, or potassium carbonate. In particular, the carbonate salt particles preferably include particles of calcium carbonate and/or magnesium carbonate.

The template material may include a metal compound other than the carbonate salt. Such a metal compound may be a monovalent or multivalent metal compound and is preferably a multivalent metal compound. The monovalent metal compound may be a chloride, sulfate, nitrate, or phosphate of an alkali metal, such as sodium or potassium. The multivalent metal compound may be a compound of an alkaline earth metal, such as calcium or magnesium, or a compound of a trivalent metal, such as aluminum. The multivalent metal compound is preferably a calcium compound, a magnesium compound, or an aluminum compound. The calcium, magnesium, or aluminum compound may be, for example, a chloride, a sulfate, a nitrate, a phosphate, or an oxide, and is preferably an oxide.

The metalloid (semimetal) compound may be, for example, a compound of boron, silicon, germanium, or antimony, and is preferably a silicon compound. The template material may be a silicon-based template material, which includes, for example, silicon monoxide, silicon dioxide, silicon nitride, silicon carbide, or silicon, and preferably includes silicon dioxide. Particles of those materials may be classified as ceramic particles.

The template material also preferably includes a fumed compound (in the form of aerosol fine particles), which can form an agglomerate structure including a bead chain of primary particles and having branched structures. The fumed compound may be, for example, a compound produced by flame hydrolysis, which is one of dry methods for producing inorganic materials.

A typical example of the fumed compound is fumed silicon dioxide. When produced by flame hydrolysis, which includes no liquid-phase process, fumed silicon dioxide can undergo loose agglomeration. Thus, fumed silicon dioxide has high dispersibility in a liquid phase or a compound (solid-phase). Fumed silicon dioxide can be produced by high-temperature gas-phase hydrolysis of silicon tetrachloride in an oxyhydrogen flame, which is accompanied by hydrochloric acid as a byproduct. For example, silicon dioxide particles with an average particle size of 7 to 40 nm and a specific surface area of 50 to 380 m²/g can be produced under different conditions, such as changes in flame temperature, feed ratio between oxygen and hydrogen, raw material feed rate, and residence time.

The fumed compound produced by flame hydrolysis may also be fumed alumina, fumed titania, or fumed zirconia. Other examples of the fumed metal compound include chlorides of Na, Ba, or Sr; sulfates of K, Na, Sr, or Mg; nitrates of Na or K; phosphates of Na or K; carbonates of Na, K, Ca, or Mg; and metal oxides of Na, K, Ca, or Ba. The template material is preferably in the form of aerosol.

The template material may also be precipitated silica. Precipitated silica can be produced by a process including: reacting a sodium silicate solution with an acid in a liquid phase; and subjecting the product to precipitation, filtration, washing, drying, and grinding. The reaction conditions may be controlled to produce silicon dioxide particles with an average particle size of about 7 to about 140 nm and a specific surface area of about 20 to about 400 m²/g.

In the present embodiment, the template material typically has a water content of 5 mass% or less, preferably 3 mass% or less, more preferably 1.5 mass% or less, even more preferably 1 mass% or less, furthermore preferably 0.5 mass% or less.

In the present embodiment, the template material typically has a carbon content of 0.0001 mass% or more, preferably 0.01 mass% or more, more preferably 0.05 mass% or more, even more preferably 0.1 mass% or more, furthermore preferably 0.5 mass% or more. The carbon content of the template material typically has an upper limit of 5 mass% or less, preferably 4 mass% or less, more preferably 3 mass% or less, even more preferably 2.5 mass% or less, furthermore preferably 2 mass% or less. The template material with a carbon content in such a range can facilitate the formation of the carbonaceous layer on its surface, and is preferred thereby.

In the present embodiment, for example, chemical vapor deposition (CVD) may be used to form the carbonaceous layer on the template surface. In such a process, the amount of carbon deposition on the surface of the template material will significantly depend on the type of the raw material gas, the concentration of the raw material gas, the flow rate, the reaction temperature, the reaction time, and other CVD reaction conditions, and the surface conditions of the template material.

The CVD carbon deposition should be performed on a compound having favorable surface conditions. Such a compound may be, for example, an oxygen-containing compound. During the CVD reaction, carbon atoms from the raw material can replace oxygen atoms in the oxygen-containing compound molecules to start carbon deposition. The oxygen-containing compound may be, for example, the metal oxide or the metal carbonate described above. In particular, the oxygen-containing compound is preferably an acidic or basic compound. The basic oxygen-containing compound may be, for example, magnesium oxide or calcium carbonate.

The compound having surface conditions favorable for the formation of the carbonaceous layer by CVD is also preferably a compound having a hydrocarbon moiety, which can serve as a carbon source. Such a hydrocarbon moiety may be a moiety of a compound for use as a raw material gas described later, which may be, for example, a compound having a methyl group or a carbon-carbon unsaturated bond. The template material preferably includes an inorganic compound having a hydrocarbon moiety on its surface.

The inorganic compound having a hydrocarbon moiety on its surface is preferably an inorganic material surface-treated with a silane coupling agent, specifically a silica compound. The silane coupling agent may be a commonly used surface treatment agent, such as a methoxy silane coupling agent, an ethoxy silane coupling agent, a vinyl silane coupling agent, a dialkoxy silane coupling agent, or a trialkoxy silane coupling agent. In particular, the silane coupling agent is preferably a trialkoxy silane coupling agent, which has a relatively large number of methyl groups per molecule, specifically a trimethoxysilane compound.

The silane coupling agent content of the inorganic material, which may be represented by the hydrocarbon content of the inorganic material, is typically 0.01 to 10 mass%, preferably 0.02 to 8 mass%, more preferably 0.05 to 5 mass%, even more preferably 0.1 to 3 mass%, furthermore preferably 0.5 to 1.5 mass%, although it may be selected as appropriate depending on intended use. The inorganic compound with a silane coupling agent content (hydrocarbon content) in such a range facilitates to adjust the carbon content of the template surface.

The template material may include one of those compounds or a combination of two or more of those compounds. In particular, the template material preferably includes a silica compound, such as fumed silicon dioxide, or a carbonate compound, such as calcium carbonate.

### (Carbonaceous Layer Formation and Carbonization Step)

In the present embodiment, for example, the carbonaceous layer may be formed on the surface of the template material by bringing, into contact with the template material, an organic material used as a carbon source and carbonizing the organic material by heat treatment. The contact with the carbon source and the carbonization by heat treatment may be performed simultaneously or sequentially. For example, the carbon source may be brought into contact with the template material at a temperature in the range of room temperature to about 1,000°C.

The carbon source may be brought into contact with the template material by a liquid-phase or gas-phase contact method, and preferably by a gas-phase contact method. The liquid-phase contact method includes, for example, dipping the template material in an organic material solution. The gas-phase contact method includes, for example, introducing an organic material gas at high temperature and bringing the organic material gas into contact with the template material, which corresponds to what is called CVD.

### (Gas-Phase Contact Method)

In the present embodiment, the gas-phase contact method is preferably chemical vapor deposition (CVD). CVD is preferably performed in a temperature range where dehydrogenation reaction can proceed so that the organic compound serving as the carbon source can be strongly bonded to the template material upon contact with it.

The carbon source for use in the gas-phase contact method may be any suitable organic compound selected as appropriate depending on intended use. For example, the carbon source is preferably a saturated hydrocarbon, an unsaturated hydrocarbon having a double bond and/or a triple bond, an alicyclic hydrocarbon, an aromatic hydrocarbon, or any other hydrocarbon. The saturated hydrocarbon may be a linear or branched hydrocarbon, such as methane, ethane, or propane. The unsaturated hydrocarbon may be a linear or branched hydrocarbon, such as ethylene, propylene, isoprene, or acetylene. The alicyclic hydrocarbon may be, for example, cyclopropane or cyclohexane. The aromatic hydrocarbon may be, for example, benzene or toluene.

In particular, the hydrocarbon is preferably methane, ethane, acetylene, ethylene, propylene, or benzene. For highly crystalline carbon deposition, the hydrocarbon is preferably methane, propylene, or benzene. In particular, for deposition of a highly crystalline carbon material with a high decomposition temperature, the hydrocarbon is preferably methane.

The organic compound for use in the gas-phase contact method may also be an alcohol, such as methanol, ethanol, propanol, or butanol, or a nitrogen-containing compound, such as acetonitrile or acrylonitrile.

During CVD, the reaction may be performed at any suitable temperature selected as appropriate depending on the decomposition temperature of the organic compound (carbon source) and other conditions. The reaction temperature is typically 400 to 1000°C, preferably 600 to 950°C, more preferably 800 to 900°C.

During CVD, the reaction may be performed for any suitable time period (CVD treatment time at a specific heating temperature) selected as appropriate depending on the type of the template material or the organic compound (carbon source) or the number of carbonaceous layers to be deposited. The reaction time period may be typically 0.1 to 10 hours, preferably 0.5 to 5 hours, more preferably 1 to 3 hours. The reaction time period required for sufficient carbon deposition may be appropriately selected based on the result of analysis of the reaction product by the analysis method disclosed herein.

If necessary, the CVD reaction may be performed under an inert gas atmosphere. The inert gas is typically nitrogen, helium, neon, or argon and preferably argon. In general, the CVD method may include circulating and heating the organic compound in a gaseous state together with a carrier gas so as to bring the organic compound in contact with the template material so that carbon can be easily adsorbed or deposited onto the template material from the gas phase. The type of the carrier gas, the flow rate, the flow volume, and the heating temperature may be appropriately selected depending on the type of the organic compound used. The carrier gas may be, for example, the inert gas. Alternatively, the carrier gas may be a mixture of the inert gas and oxygen or hydrogen gas.

The number of carbonaceous layers being deposited on the template material may be appropriately controlled by controlling the CVD reaction time. For the formation of thin graphene layers, the carrier gas flow rate is preferably adjusted to 0.05 to 5 m/min, more preferably 0.1 to 1 m/min, even more preferably 0.2 to 0.8 m/min, furthermore preferably 0.32 to 0.64 m/min. For the formation of an optimal number of carbonaceous layers, specifically graphene layers, the amount of feed of the organic compound is preferably adjusted to 1 to 70 vol%, more preferably 5 to 50 vol%, even more preferably 10 to 40 vol%, furthermore preferably 15 to 35 vol%, based on the total amount of the carrier gas and the organic compound.

In the carbon material production method according to the present embodiment, the number of carbonaceous layers may be appropriately selected depending on intended use. The number of carbonaceous layers for the carbon material is typically 1 or more, preferably 1.2 or more, more preferably 1.5 or more, even more preferably 2 or more, furthermore preferably 2.2 or more, and typically has an upper limit of 15 or less, preferably 10 or less, more preferably 8 or less, even more preferably 6 or less, furthermore preferably 5 or less. The carbon material having such a number of carbonaceous layers, specifically graphene layers can have high strength characteristics and good elastic deformation ability and tends to maintain a hollow structure. For example, the number of carbonaceous layers may be determined by a process including: depositing carbonaceous layer on the template particles; then determining the weight of the carbonaceous layers using thermogravimetric (TG) analysis; calculating the weight of carbonaceous layers per unit area of the template from the weight of carbonaceous layers and the surface area of the template particles; and dividing the result by the weight of carbonaceous layer per unit area of single-layer graphene (7.61 × 10⁻⁴ g/m²).

During the CVD reaction, carbonization reaction may also occur, which means that there is no need to perform carbonization treatment independently. If desired, however, carbonization may be performed.

### (Liquid-Phase Contact Method)

The liquid-phase contact method is preferably performed using an organic compound having a functional group reactive with functional groups on the surface of the template, specifically hydroxyl groups. In particular, such an organic compound is preferably a benzenoid hydrocarbon compound having a functional group reactive with hydroxyl groups. In particular, such an organic compound is preferably a benzenoid aromatic hydrocarbon compound having a hydroxyl group and/or a carboxyl group and more preferably phenol, hydronaphthalene, or dihydronaphthalene. This is because such an organic compound having a functional group reactive with functional groups on the template surface can form a strong bond, such as an ester bond, with the template material so that the organic compound facilitates carbonization without being volatilized during the carbonization by heat treatment.

The liquid-phase contact method may include, for example, impregnating, at room temperature, the template material with a solution of the organic compound (carbon source) in a solvent to bring the organic compound into contact with the template material. The organic compound and the template material are preferably held for a certain period of time at a temperature in the range of 250 to 600°C so that they can be strongly bonded together. During this process, the organic compound and hydroxyl groups on the surface of the template material undergo dehydration condensation reaction, such as esterification, to be bonded together via ester bonds or the like, which facilitates formation of carbonaceous layers with a graphene sheet structure. The reaction may be followed by lowering the temperature and removing the organic compound residue unreacted with the template material by washing with a solvent.

The organic compound (carbon source) in contact with the template material is then carbonized by heat treatment. Through the heat treatment, the organic compound, such as the hydrocarbon, undergoes dehydrogenation and related reactions, resulting in the transformation of carbon atoms into a graphene sheet structure or the like. The heat treatment temperature is typically 600°C or more, preferably 600 to 1,500°C, more preferably 750 to 1,500°C, even more preferably 800 to 1,000°C. The heat treatment may be performed at 1,500°C or more as long as the template material will not collapse or melt.

### <Template Removal Step>

The resulting carbonaceous layer-coated template material is then subjected to the template removal step, which includes removing the template to form a carbon material precursor. In the present embodiment, the template removal step may be performed using any suitable method capable of removing the template while maintaining the resulting carbonaceous layers. For example, the template removal step may be performed using an acid or alkali dissolution method, preferably using an acid dissolution method.

In the present embodiment, for example, the acid for the dissolution method may be hydrochloric acid, sulfuric acid, nitric acid, phosphoric acid, boric acid, or hydrofluoric acid, and preferably hydrochloric acid or hydrofluoric acid, which may be selected as appropriate depending on the type of the template material. The acid concentration may be appropriately adjusted within a range where the dissolution and removal of the template are possible. The acid may be used in any suitable amount with which the dissolution and removal of the template material are possible. For example, the acid may be used in an amount 30 times or more or 50 times or more the stoichiometric amount of the template material.

The dissolution and removal of the template material is performed typically at a temperature of 5 to 100°C, preferably 10 to 50°C, more preferably 20 to 30°C. The step of dissolving and removing the template material may be performed with stirring, vibrating, and any other operation. The removal step may be performed for a suitable period of time selected as appropriate within a range where the dissolution and removal of the template are possible.

After the removal of the template, for example, the resulting carbon material may be collected by filtration and then washed with pure water. The washing may be performed under appropriately selected conditions. Preferably, the washing should be completed after the pH of the wash is confirmed to be neutral.

After being washed as desired, the carbon material resulting from the removal of the template material may be dried by heating under vacuum. The drying by heating under vacuum may be performed under any suitable conditions, such as a temperature of 100 to 200°C and a time period of 1 to 10 hours.

### <Heating Step>

The steps described above result in the production of a precursor of the carbon material, such as CMS, or a precursor of carbonaceous layers for forming GMS. The resulting carbon material may be further subjected to heat treatment. In particular, the carbon material precursor is preferably subjected to heat treatment. The heat treatment (heating step) improves the carbon crystallinity and leads to, for example, stable formation of the graphene crystal structure, so that the resulting carbon material can have high levels of electrical conductivity, corrosion resistance, and/or specific surface area. In addition, the heat treatment can increase the size of agglomerates.

The heating step may be performed under any conditions suitable for improving the carbon crystallinity. For example, the heating step may include holding the temperature at 1,000 to 3,000°C, preferably 1,300 to 2,500°C, more preferably 1,500 to 2,000°C, even more preferably 1,600 to 1,900°C, furthermore preferably 1,750 to 1,850°C. The heat treatment at a temperature in such a range can produce the carbon material with higher levels of electrical conductivity, corrosion resistance, and/or specific surface area, and is preferred thereby. The heat treatment is typically performed for a time period (holding time at a specific heat treatment temperature) of 0.1 to 10 hours, preferably 0.2 to 5 hours, more preferably 0.5 to 5 hours. The heat treatment step is preferably performed at atmospheric or reduced pressure.

During the heating step at 1,000°C or more, functional groups bonded to carbon atoms (mainly oxygen-containing functional groups) or carbon chains not forming six-membered rings may undergo elimination reaction to form unbound species. The resulting unbound species may bond to other nearby carbon atoms to hinder the bonding of functional groups to the surface of the carbon material. For example, therefore, the heat treatment may be performed at 1,500°C or more, preferably at 1,600°C or more, so that the resulting carbon material can have higher electron conductivity and tends to retain interior spaces.

The heating step may include controlling structural defects in a graphene part of the carbonaceous layers or a part other than the graphene part. Such structural defects include spaces formed in the agglomerate structure by the dissolution of the template material and permeable holes formed in the outer shell of the carbonaceous layers. The degree of such structural defects (specifically the size of spaces inside the carbon material and the size of permeable holes for permeation of oil or an electrolyte solution into the particles) can be controlled by changing the reaction conditions including the heat treatment temperature and the heat treatment time.

The production method described above facilitates to produce the carbon material of the present invention, such as CMS or GMS.

### <<Applications of the Carbon Material>>

The carbon material described above, which has a high oil absorption, can be added to a polymer to form a highly-reinforced polymer composite material with high electrical conductivity, for example. Thus, the carbon material is suitable for use in electrically-conductive composite materials and, in particular, suitable for use in secondary batteries. The present invention also encompasses a liquid dispersion including a dispersion of the carbon material; a composition for an electrode including the carbon material; a slurry for an electrode including the carbon material; methods for producing them; an electrode including the carbon material; and a lithium-ion battery including the carbon material. Hereinafter, such embodiments will be described.

### <Liquid Dispersion>

This embodiment is directed to a liquid dispersion including the carbon material dispersed in a dispersion medium. The dispersion medium is preferably a polar solvent particularly in a case where the liquid dispersion is used for the production of lithium-ion batteries. For high affinity for binder polymers, the dispersion medium preferably includes N,N-dimethylformamide, N-methylpyrrolidone (NMP), N,N-dimethylacetamide, or water, and more preferably includes N-methylpyrrolidone (NMP). In a case where the carbon material includes graphene, the dispersion medium is preferably N-methylpyrrolidone (NMP).

### <Composition for an Electrode>

This embodiment is directed to a composition for an electrode including the carbon material, an active material, and a binder.

### (Active Material)

In the present embodiment, for example, the active material may be one commonly used for positive or negative electrodes. The composition may include the carbon material and the active material in any suitable ratio selected as appropriate depending on intended use. The composition typically contains 0.005 to 20 parts by mass, preferably 0.01 to 10 parts by mass, more preferably 0.05 to 5 parts by mass, even more preferably 0.1 to 2 parts by mass, furthermore preferably 0.5 to 1 part by mass of the carbon material, based on 100 parts by mass of the active material.

### (Binder)

In the present embodiment, for example, the binder may be one commonly used for positive or negative electrodes. The composition may include the binder in any suitable amount selected as appropriate depending on intended use. The composition typically contains 0.05 to 10 parts by mass, preferably 0.1 to 8 parts by mass, more preferably 0.5 to 6 parts by mass, even more preferably 1 to 5 parts by mass, furthermore preferably 2 to 4 parts by mass of the binder, based on 100 parts by mass of the active material.

### (Optional Additive)

The composition for an electrode according to the present embodiment may contain an optional additive as desired in addition to the carbon material, the active material, and the binder. Such an optional additive may be any suitable one used for compositions for conventional battery electrodes. The composition may typically contain 20 parts by mass or less, preferably 15 parts by mass or less, more preferably 10 parts by mass or less, even more preferably 5 parts by mass or less, furthermore preferably 2 parts by mass or less of the optional additive, based on 100 parts by mass of the active material.

### <Slurry for an Electrode>

This embodiment is directed to a slurry for an electrode including the composition for an electrode dispersed in a solvent. The solvent may be any suitable one in which the binder can be dissolved or dispersed. The solvent may be one commonly used for positive or negative electrodes or the dispersion medium for use in the liquid dispersion of the carbon material. The solvent may be used in any appropriate amount, which may be adjusted such that the slurry for an electrode can be produced with a viscosity that allows for its smooth application on current collectors in the next step.

### <Electrode>

This embodiment is directed to an electrode including the carbon material described above. The electrode according to the present embodiment may be a negative or positive electrode. For example, the electrode can be obtained by applying the slurry for an electrode to a current collector and then drying the slurry. The current collector may be any type commonly used for positive or negative electrodes.

### <Lithium-ion Secondary Battery>

The present embodiment is directed to a lithium-ion secondary battery including the carbon material described above. Specifically, the lithium-ion secondary battery includes a positive electrode, a negative electrode, a separator between the positive and negative electrodes, and an electrolyte, in which at least one of the positive electrode or the negative electrode includes the electrode described above (the positive electrode and/or the negative electrode described above). One of the positive or negative electrode may be free of the carbon material described above. The separator and the electrolyte may be any type commonly used for lithium-ion secondary batteries. If desired, the lithium-ion secondary battery according to the present embodiment may further include a battery case, which houses an electrode assembly of the positive and negative electrodes and the separator, and a sealing member for sealing the battery case.

### <Other Applications>

The carbon material of the present invention will also effectively function in any electrochemical device other than the lithium-ion secondary battery. Specifically, the carbon material of the present invention can function to form an electrically-conductive path in electrodes where electron transfer will occur according to device reaction or can function to reinforce physically-deformable electrodes or other members. In some embodiments, the carbon material, which is durable due to its graphene structure, may be used to prevent direct contact between a reactive material in an oxidized or reduced state and a third material (e.g., catalyst).

The examination of application as devices other than lithium-ion secondary batteries include lithium-ion batteries, sodium-ion batteries, potassium-ion batteries, magnesium-ion batteries, calcium-ion batteries, aluminum-ion batteries, lithium-sulfur batteries, lithium-air batteries, and other non-aqueous electrolyte batteries; sulfide-based solid electrolyte batteries, oxide-based solid electrolyte batteries, and other inorganic solid electrolyte batteries; polyethylene oxide solid electrolyte batteries and other polymer solid electrolyte batteries; and semi-solid batteries, such as polymer gel electrolyte batteries including electrolyte-impregnated PVDF.

Those devices may include a negative electrode active material, such as graphitizable carbon, non-graphitizable carbon, graphite, a silicon- or tin-lithium alloy material, or any other metallic material such as lithium; and a positive electrode active material, such as lithium-containing metal oxide, such as lithium-containing transition metal oxide having a layered, spinel, or olivine structure, lithium-free metal oxide, an organic positive electrode material, a charge-transfer complex-based positive electrode material, sulfur, or a fluoride material, in which the carbon material of the present invention can effectively enhance the electrical conductivity for any of those active materials. The carbon material of the present invention is also suitable for use in lithium-sulfur batteries disclosed in WO2018/225619, Japanese Unexamined Patent Application (Translation of PCT Application), Publication Nos. 2023-501679 and 2019-517116, and Japanese Unexamined Patent Application, Publication No. 2022-191280.

The carbon material of the present invention is also suitable for use in organic electrolyte capacitors, aqueous electrolyte capacitors, and aqueous solution batteries. The carbon material of the present invention can be used for fuel cells, such as PEFCs, SOFCs, and DMPCs, and specifically can be used to impart electrical conductivity to electrode materials and used as a support for redox catalysts.

The carbon material of the present invention can also be used for applications other than electrochemical devices. For example, the carbon material of the present invention is suitable for use in electronic device applications, such as graphene-based sensors, electromagnetic wave interference shielding materials, antenna modules, heatsinks, heat exchangers, separation membranes, reverse osmosis membranes, transparent electrode materials, structural material applications based on mechanical flexibility, and electrically-conductive ink or paste. There is a need for lighter vehicle bodies, which will directly lead to carbon dioxide emissions reduction and energy saving. Thanks to its hollow structure, therefore, the carbon material of the present invention can also be used for weight-saving applications, such as reinforcing materials for tires and various rubber products, paint, coloring pigments, electrically-conductive fillers for various polymers, and additives for magnetic recording media. The carbon material of the present invention, which has a high oil absorption, is also suitable as a rubber reinforcing material or any other polymer filler as mentioned above.

### EXAMPLES

Hereinafter, the present invention will be described in more detail with reference to examples, which are not intended to limit the present invention described above. Unless otherwise specified, the units "%", "ppm", and "parts" used to express quantities below are by mass.

Experiment 1: Production of Carbon Materials and Polymer Composite Materials, and Evaluation of Their Physical Properties

### <Example 1>

### (Production of Carbon Material)

### CVD Reaction: Formation of Carbonaceous Layers on Template Material (Template)

About 1 g of fumed silicon dioxide (raw template material) (SiO₂, AEROSIL^{®} NX90G, with a particle size of 38 nm, a BET specific surface area of 71 m²/g, and a carbon content of 0.5 to 1.5%, manufactured by NIPPON AEROSIL) was spread over a quartz boat and placed at the center of a quartz reaction tube in a horizontal CVD reactor (transparent electric furnace manufactured by Ishikawa Trading). Argon gas was fed at a flow rate of 400 mL/min into the reaction tube while the template material was heated at a rate of temperature rise of 10°C/min to 900°C, which was held for 30 minutes. Into the reaction tube, with the temperature being held at 900°C, methane gas (raw material gas concentration: 20 vol%) was fed at a flow rate of 80 mL/min together with argon gas at a flow rate of 320 mL/min for 90 minutes. Subsequently, while argon gas was fed at a flow rate of 400 mL/min, the quartz boat was cooled to room temperature and taken out so that a carbonaceous layer-coated template material was obtained, which had a carbonaceous layer coating on the surface of the template material. Thereafter, it was observed with an electron microscope that the template material was in the form of agglomerates including a chain of primary particles and having branched structures.

### Removal of Template Material

Next, the template material was removed from the resulting carbonaceous layer-coated template material by the process shown below so that a carbon material precursor was obtained.
(1) The carbonaceous layer-coated template material was sampled in a 100 mL PFA beaker, to which ultrapure water was added until the carbonaceous layer-coated template material was entirely wetted.
(2) After 46% hydrofluoric acid was added, the mixture was stirred for 2 hours using a stirrer.
(3) After the stirring was stopped, the mixture was allowed to stand until the sample settled.
(4) First the supernatant and then the sample were subjected to suction filtration using a PTFE membrane filter (47 mm in diameter, 0.1 µm in pore size).
(5) The sample on the filter was washed with about 39 mL of ultrapure water and then subjected to suction filtration. This step was repeated three times.
(6) The sample on the filter was collected into the original PFA beaker.
(7) The steps (2) to (6) were repeated again.
(8) About 40 mL of ultrapure water was added to the sample, and the mixture was stirred for 1 hour using a stirrer.
(9) After the stirring was stopped, the mixture was allowed to stand until the sample settled.
(10) After the supernatant was discarded, a 5% sodium hydroxide solution was added to the sample, and the mixture was stirred for 12 hours with heating at 80°C.
(11) After the stirring was stopped, the mixture was allowed to stand until the sample settled.
(12) First the supernatant and then the sample were subjected to suction filtration using a PTFE membrane filter (47 mm in diameter, 0.1 µm in pore size).
(13) The sample on the filter was washed with ultrapure water and subjected to suction filtration. This step was repeated until the filtrate became neutral.
(14) The sample on the filter was collected into a petri dish and dried in a dryer at 110°C for 8 hours.

### Heat Treatment

The resulting carbon material precursor was placed in a rectangular high-temperature furnace (manufactured by IZUMI-TECH). After the pressure in the furnace was reduced (10⁻¹ Pa order), the precursor was heated at a rate of temperature rise of 15°C/min to 1,800°C under a stream of argon gas (10 mL/min) and fired at 1,800°C for 1 hour. A carbon material named A (carbon material A) was obtained after the furnace was cooled to room temperature.

### (Method for Measurement of Oil Absorption of Carbon Material)

The oil absorption of the resulting carbon material A was measured according to JIS K 5101-13-1 (Test methods for pigments - Part 13: Oil absorption - Section 1: Refined linseed oil method). The result is shown in Table 1 below.

### (Transmission Electron Microscope Observation)

The morphology of the resulting carbon material A was observed. FIG. 2 shows an enlarged TEM image of the carbon material A of Example 1 observed using a transmission electron microscope (TEM model: H-7650 manufactured by Hitachi High-Technologies) at an acceleration voltage of 100 kV and a magnification of 15,000×. FIG. 3 shows a TEM image of the carbon material A of Example 1 observed using a transmission electron microscope (TEM model: JEM-2100 Plus manufactured by JEOL) at an acceleration voltage of 100 kV and a magnification of 40,000×. It was observed that, as shown in FIGS. 2 and 3, the carbon material A had surrounding walls including graphene structures composed of carbon six-membered rings. It was also observed that the carbon material A of Example 1 had a combined structure including combined hollow particulate parts that form surrounding walls having pores.

### (Nitrogen Adsorption-Desorption Measurement)

The carbon material A was subjected to nitrogen adsorption-desorption measurement using an automatic specific surface area/pore size distribution analyzer (BELSORP MINI manufactured by MicrotracBEL). Before the measurement, the sample was dried under reduced pressure at 150°C for 6 hours using BEL pre. The BET specific surface area of the sample was determined by BET method using the resulting adsorption isotherm. The BET method was applied within the relative pressure range of 0.05 to 0.3. The total pore volume of the sample was determined from the resulting adsorption isotherm by converting the nitrogen adsorption at -196°C and a relative pressure of 0.99 into the volume based on the density of liquid nitrogen. The result is shown in Table 1. The pore size distribution was determined using BJH method.

### (Raman Spectroscopy)

The carbon material A was subjected to Raman spectroscopy using a micro-Raman spectrometer (LabRAM HR-800 manufactured by HORIBA). The Raman spectroscopy was performed using a 532 nm laser, filter D1, and 100 µm aperture. The measurement range was from 300 to 3,500 cm⁻¹. Table 1 shows the intensity ratios I_{G}/I_{2D} and I_{D}/I_{G} determined from the resulting Raman spectrum.

### (Production of Polymer Composite Material)

A liquid dispersion (slurry) containing the carbon material A was prepared and used to form a polymer composite material. The carbon material A (0.5 mass%) was mixed with ternary NCM powder (LiNi_{0.5}Co_{0.2}Mn_{0.3}O₂ (a positive electrode active material manufactured by Kelong)) with an average particle size of 8 µm (97.5 mass%) and PVDF (manufactured by KUREHA) (2 mass%) in a solvent N-methylpyrrolidone (NMP). While the NMP was added in several portions, the resulting mixture was kneaded in a planetary mixer at a speed of 2,000 rpm until the mixture became a uniform slurry with suitable viscosity. The resulting slurry was applied at a constant speed to a 100 µm-thick PET film using a micrometer-equipped doctor blade coater. Subsequently, the slurry-coated film was dried in a vacuum dryer at 110°C to give a sample sheet. The sample sheet was then punched using a 20 mmφ punching machine. The punched sheet was pressed at 45 kN using a cylindrical jig and then vacuum-dried at 120°C to give a composite material sample.

### (Measurement of Electrical Resistance of Composite Material)

The resulting composite material sample was measured for composite layer resistivity at room temperature using a low resistivity meter (Loresta-FX MCP-T380 manufactured by Nittoseiko Analytec). The result is shown in Table 1.

### <Example 2>

A carbon material B was produced using the same procedure as Example 1 except that the raw template material was fumed silicon dioxide (SiO₂, AEROSIL^{®} R972 with a particle size of 25 nm, a BET specific surface area of 111 m²/g, and a carbon content of 0.6 to 1.2%, manufactured by NIPPON AEROSIL) and that the CVD reaction time was 120 minutes. It was observed with an electron microscope that the template material was in the form of agglomerates including a chain of primary particles and having branched structures. FIG. 4 shows the Raman spectrum of the carbon material B.

### <Examples 3 to 6>

Carbon materials C to F were produced using the same procedure as in Example 1 except that the CVD reaction time was set to 75 minutes (Example 3), 60 minutes (Example 4), 40 minutes (Example 5), or 130 minutes (Example 6). Some of the carbon materials were used to form a polymer composite material as in Example 1, and the composite material was measured for composite layer resistivity.

### <Example 7>

A carbon material A₀ was produced and subjected to the measurement using the same procedure as in Example 1 except that the heat treatment was not performed. The carbon material A₀ was used to form a polymer composite material as in Example 1, and the composite material was measured for composite layer resistivity.

### <Comparative Example 1>

The carbon material used was commercially available carbon black (DENKA BLACK Li-100 manufactured by Denka). Except this, the oil absorption and other properties were measured, and a polymer composition material was produced as in Example 1.

### <Comparative Example 2>

A carbon material G and a polymer composite material were produced using the same procedure as in Example 1 except that the raw template material was alumina (Al₂O₃, PURALOX SBa200 with a particle size of 7 nm and a BET specific surface area of 202 m²/g, manufactured by SASOL) and that the CVD reaction time was 120 minutes. As described below, the carbon material G has a smaller total pore volume, specifically a smaller macropore volume than the carbon materials A to F and A₀. In other words, the extended combined structures of the carbon material G has less voids than the carbon materials A to F and A₀, which means that the carbon material G has less combined structures than the carbon materials A to F and A₀. This suggests that, in Comparative Example 2, the carbonaceous layer-coated template material according to the present invention should be formed insufficiently despite using the same procedure as in Example 1 where the production method is according to the present invention. This example is shown as a comparative example for this reason.

### <Comparative Example 3>

A carbon material H and a polymer composite material were produced using the same procedure as in Example 1 except that the raw template material was magnesia (MgO, Kyowa Mag MF150 with a particle size of 30 nm and a BET specific surface area of 129 m²/g, manufactured by Kyowa Chemical Industry), the CVD reaction time was 120 minutes, and the template was removed using the procedure described below. The carbon material H also had a smaller total pore volume, specifically a smaller macropore volume than the carbon materials A to F and A₀. In other words, the carbon material H also had less combined structures than the carbon materials A to F and A₀.

### (Removal of MgO Template)

After the CVD reaction was completed, 1 to 1.4 g of the multilayer product, about 100 g of hydrochloric acid (5 mol/L, FUJIFILM Wako Pure Chemical), and a stir bar were added to a Teflon^{®} beaker and stirred at room temperature for 5 hours. The resulting sample was subjected to membrane filter (0.1 µm) filtration, five times of washing with pure water, and suction filtration. During this process, the deposit on the filter was carefully prevented from drying. Next, the deposit was placed into a glass beaker containing about 100 mL of acetone. The beaker was covered with aluminum foil and held at a reduced pressure of 0.06 MPa for 2 minutes in a vacuum dryer. The dried material was returned to atmospheric pressure and then subjected to acetone exchange with heating at 60°C for 10 minutes in a thermostatic chamber. The supernatant in the beaker was removed with a pipette. The same acetone exchange was performed once more, which was followed by drying under reduced pressure at 150°C for 6 hours, so that the carbon material H was obtained as a result of the template removal.

**[Table 1]**

| Table 1: Properties of carbon materials and polymer composite materials | | | | | | | | |
|---|---|---|---|---|---|---|---|---|
| | Carbon material | Template | Properties of carbon material | | | | | Properties of CM* |
| | | | Oil absorption [mL/100g] | Specific surface area [m²/g] | Total pore volume [cc/g] | Stacking index I_{G}/I_{2D} | Amorphous index I_{D}/I_{G} | Composite layer resistivity [Ω·cm] |
| Example 1 | A | NX90G | 1889 | 906 | 4.34 | 1.79 | 1.79 | 62 |
| Example 2 | B | R972 | 2201 | 899 | 3.47 | 1.74 | 1.40 | - |
| Example 3 | C | NX90G | 1678 | 1020 | 5.35 | 1.67 | 1.69 | 49 |
| Example 4 | D | NX90G | 1140 | 946 | 5.62 | 1.43 | 1.70 | 128 |
| Example 5 | E | NX90G | 703 | 986 | 2.95 | 1.20 | 1.68 | - |
| Example 6 | F | NX90G | 2280 | 817 | 3.81 | 2.08 | 1.59 | 42 |
| Example 7 | A₀ | NX90G | 2297 | 1145 | 6.03 | 3.57 | 1.72 | 83 |
| Comparative Example 1 | DB Li-100 | - | 303 | 65 | 0.26 | 2.07 | 1.01 | 2888 |
| Comparative Example 2 | G | Al₂O₃ | 430 | 1747 | 2.40 | 0.73 | 1.59 | 7051 |
| Comparative Example 3 | H | MgO | 492 | 1032 | 1.98 | 0.86 | 1.00 | 475 |

| | | | | | | | | |
|---|---|---|---|---|---|---|---|---|
| * Properties of composite material | | | | | | | | |

As shown in Table 1, the carbon materials obtained in Examples 1 to 7 all showed an oil absorption in the range of 703 to 2,297 mL/100 g, which is larger than 550 mL/100 g. The commercially available carbon black (acetylene black, which is said to be a carbon material with a relatively high oil absorption) (Comparative Example 1) showed an oil absorption of about 300 mL/100 g. Conventional carbon materials will not have an oil absorption of 550 mL/100 g or more. The carbon materials A to F and A₀ according to the present invention successfully absorbed more oil. This may be because their interior spaces have a total pore volume larger than the total volume of pores in acetylene black (see Table 1).

The carbon materials of Comparative Examples 2 and 3 have a smaller total pore volume than the carbon material of each example, which suggests that the carbonaceous layer-coated template material was insufficiently formed during the carbon material production process. The carbon materials of Comparative Examples 2 and 3 had an oil absorption of less than 550 mL/100 g. The carbon materials of Examples 1 to 7 with an oil absorption of more than 700 mL/100 g or more than 2,000 mL/100 g have been found to be new carbon materials.

The carbon material A₀ of Example 7 has an I_{D}/I_{G} ratio of 1.72, which indicates that it contains a relatively large number of sp3 carbon atoms. This suggests that, even with not high graphene content, the carbon material can have a high oil absorption.

The polymer composite material containing the carbon material A and other components exhibited a significantly low composite layer resistivity as compared to the composite material containing acetylene black and other components. It has been demonstrated that the carbon material of the present invention having an oil absorption of 550 mL/100 g or more can form polymer composite materials with high electrical conductivity.

Experiment 2: Confirmation of Basic Physical Properties of Carbon Materials (Comparison of Oil Absorption between Different Measurement Methods)

### <Comparative Examples 4 to 6>

Three types of carbon black with oil absorptions according to JIS K 6217-4 shown in their catalogs were measured for oil absorption according to JIS K 5101-13-1. The results are shown together with the catalog values in Table 2. There was no significant difference in oil absorption between the two measurement methods.

**[Table 2]**

| Table 2: Results of oil absorption measurement | | | |
|---|---|---|---|
| | Carbon black | Oil absorption [mL/100g] | |
| | | Measured value | Catalog value |
| Comparative Example 4 | #4000B (manufactured by Mitsubishi Chemical) | 108 | 102 |
| Comparative Example 5 | Asahi Thermal (manufactured by Asahi Carbon) | 34 | 29 |
| Comparative Example 6 | BP2000 (manufactured by Cabot) | 329 | 330 |

Experiment 3: Analysis of Carbon Materials by Nitrogen Adsorption-Desorption Measurement (Comparison of Specific Surface Area, Pore Volume, and Other Properties between Carbon Materials of Examples and Comparative Examples)

### (Nitrogen Adsorption-Desorption Measurement)

The nitrogen adsorption-desorption measurement described above was performed on the carbon materials A to F and A₀ prepared in Examples 1 to 7, carbon black (DENKA BLACK Li-100 manufactured by Denka) used in Comparative Example 1, and the carbon materials G and H prepared in Comparative Examples 2 and 3.

The resulting adsorption isotherms were used to determine the BET specific surface area, the mode pore size, the total pore volume (at a relative pressure of 0.99), the micropore volume (at a relative pressure of about 0.1), a mesopore volume (at a relative pressure of 0.1 to 0.96), and the macropore volume (at a relative pressure of 0.96 to 0.99). The average pore diameter d was calculated from the BET specific surface area S and the total pore volume V using d = 4V/S, assuming that the pores were cylindrical. The results are shown in Table 3. For Comparative Example 1 with no peak in the pore size distribution, the mark "-" is provided in the "mode pore size" column.

### <Comparative Examples 7 and 8>

Besides the above, the carbon materials shown below were also subjected to nitrogen adsorption-desorption measurement. The results are shown in Table 3. For Comparative Example 7 with no peak in the pore size distribution like Comparative Example 1, the mark "-" is provided in the "mode pore size" column.

### Comparative Example 7: Graphite (KS6 manufactured by Imerys) Comparative Example 8: Activated Carbon (YP-5 manufactured by Kuraray)

Furthermore, for each carbon material, the percentages of micropore volume, mesopore volume, and macropore volume in the total pore volume were calculated and shown in Table 4.

**[Table 3]**

| | Carbon material | Oil absorption [mL/100g] | Specific surface area [m²/g] | Mode pore size [nm] | Total pore volume [cc/g] | Micropore volume [cc/g] | Mesopore volume [cc/g] | Macropore volume [cc/g] | Average pore size [nm] |
|---|---|---|---|---|---|---|---|---|---|
| Example 1 | A | 1889 | 906 | 23.8 | 4.34 | 0.34 | 2.77 | 1.23 | 19.1 |
| Example 2 | B | 2201 | 899 | 15.8 | 3.47 | 0.33 | 2.13 | 1.01 | 15.4 |
| Example 3 | C | 1678 | 1020 | 23.0 | 5.35 | 0.31 | 3.05 | 1.99 | 21.0 |
| Example 4 | D | 1140 | 946 | 21.3 | 5.62 | 0.36 | 2.85 | 2.41 | 23.8 |
| Example 5 | E | 703 | 986 | 16.2 | 2.95 | 0.35 | 2.12 | 0.48 | 12.0 |
| Example 6 | F | 2280 | 817 | 24.4 | 3.81 | 0.31 | 2.34 | 1.18 | 18.7 |
| Example 7 | A₀ | 2297 | 1145 | 28.8 | 6.03 | 0.42 | 3.04 | 2.57 | 21.1 |
| Comparative Example 1 | DB Li-100 | 303 | 65 | - | 0.26 | 0.03 | 0.11 | 0.12 | 15.8 |
| Comparative Example 2 | G | 430 | 1747 | 6.6 | 2.40 | 0.60 | 1.73 | 0.07 | 5.5 |
| Comparative Example 3 | H | 492 | 1032 | 9.6 | 1.98 | 0.36 | 1.58 | 0.04 | 7.7 |
| Comparative Example 7 | KS6 | 63 | 19 | - | 0.11 | 0.01 | 0.04 | 0.06 | 23.5 |
| Comparative Example 8 | YP-50F | 160 | 1693 | 0.9 | 0.79 | 0.65 | 0.12 | 0.02 | 1.9 |

**[Table 4]**

| Table 4: Percentage of each type of pores | | | | | | | | |
|---|---|---|---|---|---|---|---|---|
| | Carbon material | Oil absorption [mL/100g] | N₂ adsorption | | | Percentage of pores (%) | | |
| | | | Specific surface area [m²/g] | Mode pore size [nm] | Total pore volume [cc/g] | Micropores [%] | Meso-pores [%] | Macropores [%] |
| Example 1 | A | 1889 | 906 | 23.8 | 4.34 | 8 | 64 | 28 |
| Example 2 | B | 2201 | 899 | 15.8 | 3.47 | 9 | 62 | 29 |
| Example 3 | C | 1678 | 1020 | 23.0 | 5.35 | 6 | 57 | 37 |
| Example 4 | D | 1140 | 946 | 21.3 | 5.62 | 6 | 51 | 43 |
| Example 5 | E | 703 | 986 | 16.2 | 2.95 | 12 | 72 | 16 |
| Example 6 | F | 2280 | 817 | 24.4 | 3.81 | 8 | 61 | 31 |
| Example 7 | A₀ | 2297 | 1145 | 28.8 | 6.03 | 7 | 50 | 43 |
| Comparative Example 1 | DB Li-100 | 303 | 65 | - | 0.26 | 11 | 44 | 45 |
| Comparative Example 2 | G | 430 | 1747 | 6.6 | 2.40 | 25 | 72 | 3 |
| Comparative Example 3 | H | 492 | 1032 | 9.6 | 1.98 | 18 | 80 | 2 |
| Comparative Example 7 | KS6 | 63 | 19 | - | 0.11 | 6 | 37 | 57 |
| Comparative Example 8 | YP-50F | 160 | 1693 | 0.9 | 0.79 | 82 | 15 | 3 |

Table 3 shows that the carbon materials A to F and A₀ (Examples 1 to 7 according to the present invention) are each characterized by having a relatively large BET specific surface area (817 to 1,145 m²/g) and a relatively large total pore volume (at least 2.95 cc/g). In contrast, as shown in Table 4, only the activated carbon of Comparative Example 8 has a specific surface area of at least 800 m²/g among Comparative Examples 1, 7, and 8, while the activated carbon of Comparative Example 8 has a relatively small total pore volume of at most 1.00 cc/g.

Table 4 shows that the carbon materials A to F and A₀ according to the present invention each have a relatively large mode pore size, a relatively large specific surface area, a relatively large total pore volume, and a relatively large macropore volume, which suggests that they are unique porous carbon materials, unlike other conventional carbon materials. On the other hand, the carbon materials G and H has a total pore volume with a macropore volume content as low as less than 5%, which suggests that their elongated combined structure was insufficiently formed.

Experiment 4: Structural Analysis of Carbonaceous Layers in Carbon Materials (X-Ray Analysis of Carbonaceous Layers in Carbon Materials Produced in Examples and Reference Examples)

### (XRD Measurement)

XRD (X-ray diffraction) measurement was performed on the carbon material using an X-ray diffractometer (Miniflex 600 manufactured by Rigaku). The measurement sample was mounted on the circular recess of the zero-background Si holder and subjected to XRD measurement under the conditions shown below. Table 5 shows the d002 value and the Lc(002) value together with the Raman spectrum data.
X-ray source: CuKα
Tube voltage: 40 kV
Tube current: 15 mA
Measurement angle: 5 to 90 degrees
Scan speed: 2 deg/min
Scan axis: 2θ/θ

**[Table 5]**

| Table 5: Results of Raman spectrum-XRD analysis of each carbon material | | | | | | |
|---|---|---|---|---|---|---|
| | Carbon material | Oil absorption [mL/100g] | Raman | | XRD | |
| | | | I_{G}/I_{2D} | I_{D}/I_{G} | d002 [Å] | Lc(002) [nm] |
| Example 1 | A | 1889 | 1.79 | 1.79 | 3.53 | 1.21 |
| Example 2 | B | 2201 | 1.74 | 1.40 | 3.73 | 1.13 |
| Example 3 | C | 1678 | 1.67 | 1.69 | 3.69 | 1.18 |
| Example 4 | D | 1140 | 1.43 | 1.70 | 3.39 | 1.15 |
| Example 5 | E | 703 | 1.20 | 1.68 | 3.42 | 1.12 |
| Example 6 | F | 2280 | 2.08 | 1.59 | 3.53 | 1.19 |
| Example 7 | A₀ | 2297 | 3.57 | 1.72 | 3.56 | 1.02 |
| Comparative Example 1 | DB Li-100 | 303 | 2.07 | 1.01 | 3.45 | 3.53 |
| Comparative Example 2 | G | 430 | 0.73 | 1.56 | 3.43 | 1.66 |
| Comparative Example 3 | H | 492 | 0.86 | 1.00 | 3.37 | 1.74 |
| Comparative Example 7 | KS6 | 63 | 2.35 | 0.19 | 3.36 | 27.50 |
| Comparative Example 8 | YP-50F | 160 | 3.02 | 1.11 | 3.49 | 0.39 |

The D band in the Raman spectrum indicates the sp3 bond (C-H stretching vibration) of the carbon material. The D band intensity increases as the sp2 bonds in the carbon six-membered ring structures of the carbonaceous layers break and turn into the sp3 bonds. The spectrum data suggest that the carbonaceous layers in the carbon materials A to F and A₀ according to the present invention may be a mixture of crystalline and amorphous layers, which is a cause of the formation of large spaces.

Experiment 5: Determination of the Number of Carbonaceous Layers in Carbon Materials (Examination of the Relationship between the Number of Carbonaceous Layers, Pore Size, and Oil Absorption)

### (Number of Carbonaceous Layers)

The number of carbonaceous layers in each of the carbon materials of Examples 1 to 7 and Comparative Examples 2 and 3 was calculated from the carbon weight loss rate. The results are shown together with the production conditions in Table 6.

Specifically, the carbon material was subjected to TG analysis for the determination of the number of carbonaceous layers. The TG analysis was performed using STA-2500 (NETZSCH), which included heating the sample at a rate of temperature rise of 5°C/min to 900°C under a stream of argon gas (80 mL/min) and oxygen (20 mL/min) and then cooling the sample at a rate of temperature decrease of 20°C/min. The blank analysis result was subtracted from each sample analysis result. The blank analysis was performed under the same temperature profile conditions using the empty pan. The pan was made of alumina. The result of the TG analysis was used to determine the carbon weight loss rate (%), which was used to calculate the number of carbonaceous layers as shown below. The weight of the carbonaceous layers was calculated from the carbon weight loss rate, and the weight of the carbonaceous layers per unit area was calculated from the weight of the carbonaceous layers and the surface area of the template material. Next, the number of the carbonaceous layers was calculated by dividing the weight of the carbonaceous layers per unit area of the template material by the weight of a single-layer graphene per unit area (7.61 × 10⁻⁴ g/m²).

**[Table 6]**

| Table 6: Production conditions and the number of layers for each carbon material | | | | | | | | |
|---|---|---|---|---|---|---|---|---|
| | Carbon material | Template material | | CVD | | | Number of layers | Oil absorption [mL/100g] |
| | | Compound | Product No. | Methane concentration [%] | Tempera -ture [°C] | Time [min] | | |
| Example 1 | A | SiO₂ | NX90G | 20 | 900 | 90 | 3.5 | 1889 |
| Example 2 | B | SiO₂ | R972 | 20 | 900 | 120 | 3.9 | 2201 |
| Example 3 | C | SiO₂ | NX90G | 20 | 900 | 75 | 3.0 | 1678 |
| Example 4 | D | SiO₂ | NX90G | 20 | 900 | 60 | 2.5 | 1140 |
| Example 5 | E | SiO₂ | NX90G | 20 | 900 | 40 | 1.9 | 703 |
| Example 6 | F | SiO₂ | NX90G | 20 | 900 | 130 | 4.5 | 2280 |
| Example 7 | A₀ | SiO₂ | NX90G | 20 | 900 | 90 | 3.5 | 2297 |
| Comparative Example 2 | G | Al₂O₃ | SBa200 | 20 | 900 | 90 | 1.5 | 430 |
| Comparative Example 3 | H | MgO | MF150 | 20 | 900 | 90 | 1.9 | 492 |

Table 6 shows that the carbon materials A to F and A₀ according to the present invention were successfully produced with different properties through controlling the number of carbonaceous layers within a specific range. It has also been found that the oil absorption of the carbon material tends to sharply increase with increasing number of carbonaceous layers and that the two properties are correlated with each other (Examples 1 to 7 and Comparative Examples 2 and 3).

Tables 4 and 6 also show that the carbon materials A to F and A₀, which have 1.9 to 4.5 carbonaceous layers, have a large volume of macropores with sizes of 50 nm or more and have a high oil absorption.

Experiment 6: Analysis of Particulate Structure of Carbon Material (Particle Size Distribution Measurement and TEM Image Analysis)

### (Particle Size Distribution Measurement)

The agglomeration state of the carbon material was examined by particle size distribution measurement using a laser diffraction particle size distribution analyzer (MT3300EX II manufactured by MicrotracBEL). While being measured, the carbon material sample was immersed and allowed to stand in ethanol for 9 minutes without being crushed. D50, D10, D90, D90/D10, and D90/M were determined from the resulting particle size distribution curve. The results are shown in Table 7.

**[Table 7]**

| Table 7: Results of particle size distribution measurement of each carbon material | | | | | | | | |
|---|---|---|---|---|---|---|---|---|
| | Carbon material | Oil absorption [mL/100g] | Mode pore size [nm] | D10 [*µ*m] | D50 [*µ*m] | D90 [*µ*m] | D90/D10 | D90/M (×10³) |
| Example 1 | A | 1889 | 23.8 | 12 | 30 | 49 | 4.1 | 2.1 |
| Example 2 | B | 2201 | 15.8 | 11 | 28 | 45 | 4.1 | 2.8 |
| Example 3 | C | 1678 | 23.0 | 13 | 35 | 52 | 4.2 | 2.3 |
| Example 4 | D | 1140 | 21.3 | 15 | 40 | 53 | 3.7 | 2.5 |
| Example 5 | E | 703 | 16.2 | 13 | 45 | 55 | 4.2 | 3.4 |
| Example 6 | F | 2280 | 24.4 | 12 | 26 | 45 | 3.8 | 1.8 |
| Example 7 | A₀ | 2297 | 28.8 | 3 | 5 | 11 | 3.3 | 0.4 |
| Comparative Example 1 | DB Li-100 | 303 | - | 6 | 24 | 70 | 11.6 | - |
| Comparative Example 2 | G | 430 | 6.6 | 19 | 39 | 79 | 4.2 | 12.1 |
| Comparative Example 3 | H | 492 | 9.6 | 15 | 65 | 180 | 12.0 | 18.7 |
| Comparative Example 7 | KS6 | 63 | - | 2 | 4 | 6 | 2.6 | - |
| Comparative Example 8 | YP-50F | 160 | 0.9 | 3 | 6 | 10 | 3.0 | 10.8 |

Table 7 shows that the carbon materials A to F according to the present invention have D50 in the range of 26.0 to 45.0 µm. The results indicate that the measurement sample, which was only immersed and allowed to stand in the solvent without being crushed, had not so strong cohesive force. While Table 7 shows only D90/M, the values (D10/M, D50/M, and D90/M) obtained by dividing, by the mode pore size (M), cumulative particle sizes of the measured particle size distribution were all significantly small, which indicates the sample had weak cohesive force (Examples 1 to 6 as compared to Comparative Examples 1 to 3 and 8).

Experiment 7: Measurement of Gas Desorption and Combustion Temperature of Carbon Materials (Estimation of Stability of Carbon Material in Battery Applications)

### (Temperature-Programmed Gas Desorption Analysis)

Accurate qualitative and quantitative analysis of oxygen-containing functional groups and hydrogen-terminated edge sites was performed using an ultra-high-sensitivity vacuum TPD mass spectrometer with the configuration shown in FIG. 5 (developed at Tohoku University; see T. Ishii et al., CARBON 80, 2014, 135-145). More specifically, 1 to 3 mg of each carbon material was placed on a graphite sample stage and heated under vacuum at a rate of temperature rise of 10°C/min to 1,800°C. During the heating, released gases were analyzed by mass spectrometry for accurate qualitative and quantitative analysis of oxygen-containing functional groups and hydrogen-terminated edge sites. The mass spectrometer 50 includes a quartz reactor including a radiation thermometer 41, a sample holder 42, and a high-frequency induction coil 43, and includes a detection unit connected to the quartz reactor. The detection unit includes a gas storage vessel, a turbo molecular pump TMP, a rotary pump RP, a cold cathode Pirani gauge P1, and a capacitance gauge P2.

### (Combustion Temperature Measurement)

The combustion temperature of the carbon material was determined as the temperature at which its weight decreased to 90% of the original weight during a combustion oxidation test conducted under a stream of air and 5°C/min heating rate conditions using a thermogravimetric analyzer. A combustion temperature of at least 550°C was evaluated as being good.

The carbon material was examined for desorbed gases and combustion temperature. The results are shown in Table 8.

**[Table 8]**

| Table 8: Results of temperature-programmed gas desorption analysis of each carbon material | | | | | | | |
|---|---|---|---|---|---|---|---|
| | Carbon material | TPD | | | | | Combustion temperature [°C] |
| | | Total Gas [*µ*mol/g] | H [%] | O [%] | S_{edge} [m²/g] | O/C | |
| Example 1 | A | 60 | 0.002 | 0.070 | 4.2 | 0.0007 | 636 |
| Example 2 | B | 45 | 0.001 | 0.043 | 3.1 | 0.0004 | 610 |
| Example 3 | C | 170 | 0.004 | 0.161 | 11.5 | 0.0016 | 626 |
| Example 4 | D | 194 | 0.004 | 0.215 | 12.3 | 0.0022 | 622 |
| Example 5 | E | 218 | 0.006 | 0.228 | 15.9 | 0.0023 | 605 |
| Example 6 | F | 139 | 0.003 | 0.143 | 8.9 | 0.0014 | 625 |
| Example 7 | A₀ | 1576 | 0.054 | 1.241 | 125.0 | 0.0128 | 566 |
| Comparative Example 1 | DB Li-100 | 96 | 0.082 | 0.042 | 8.4 | 0.0004 | 651 |
| Comparative Example 2 | G | 100 | 0.003 | 0.105 | 7.0 | 0.0011 | 630 |
| Comparative Example 3 | H | 110 | 0.003 | 0.115 | 7.5 | 0.0012 | 638 |
| Comparative Example 7 | KS6 | 76 | 0.001 | 0.080 | 4.8 | 0.0008 | 806 |
| Comparative Example 8 | YP-50F | 3425 | 0.119 | 2.040 | 285.6 | 0.0213 | 555 |

The results in Table 8 show that the carbon materials A to F according to the present invention have sufficiently low levels of oxygen content, O/C, total gas amount, and edge site amount as determined by TPD-MS measurement. The carbon materials according to the present invention have also been demonstrated to have high enough combustion temperatures.

### (Apparent Density)

The apparent density of each carbon material was calculated from total pore volume and true density using Equation (8) below. Equation (8): 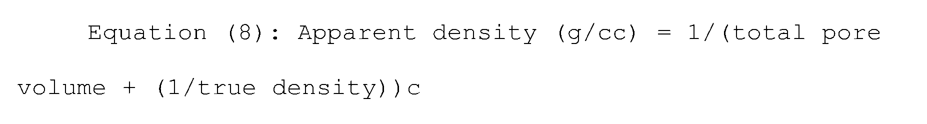 Apparent density (g/cc) = 1/(total pore volume + (1/true density))c

The total pore volume (cc/g) was calculated at a relative pressure of 0.99, and the true density used was 2.2 g/cc (the density of graphite). The results are shown in Table 9.

**[Table 9]**

| Table 9: Apparent density of each carbon material | | |
|---|---|---|
| | Carbon material | Apparent density [g/cc] |
| Example 1 | A | 0.209 |
| Example 2 | B | 0.255 |
| Example 3 | C | 0.172 |
| Example 4 | D | 0.165 |
| Example 5 | E | 0.294 |
| Example 6 | F | 0.234 |
| Example 7 | A₀ | 0.154 |
| Comparative Example 1 | DB Li-100 | 1.401 |
| Comparative Example 2 | G | 0.351 |
| Comparative Example 3 | H | 0.411 |
| Comparative Example 7 | KS6 | 1.768 |
| Comparative Example 8 | YP-50F | 0.806 |

The results in Table 9 show that the carbon materials according to the present invention have apparent densities lower than those of the comparative examples and suggest that the carbon material should preferably have an apparent density of 2.000 g/cc or less, more preferably 1.500 g/cc or less, even more preferably 1.000 g/cc or less, furthermore preferably 0.500 g/cc or less, still more preferably 0.300 g/cc or less, and preferably 0.050 g/cc or more, more preferably 0.100 g/cc or more, even more preferably 0.150 g/cc or more.

### Experiment 8: Fabrication of Lithium-Ion Batteries

Different types of carbon materials were used to form composite material samples as in Example 1, and a lithium-ion secondary battery was fabricated using each of the composite material samples as a positive electrode. The polymer composite material and the slurry prepared in Example 1 or other examples can be used, respectively, as a battery-forming composition or (positive) electrode composite material and a slurry for an electrode.

### (Fabrication of Lithium-ion Battery)

Metallic Li was punched into a 16 mmφ disc under an argon gas atmosphere in a glove box. The positive electrode (positive electrode material mixture layer) and the metallic Li disc were arranged to face each other with a 25 µm-thick separator (polypropylene microporous membrane) sandwiched between them. The resulting electrode assembly was placed in a battery case, to which a solution of 1 M LiPF₆ in a 1 : 1 mixed solvent of ethylene carbonate (EC) and diethyl carbonate (DEC) was added as an electrolyte solution. The case was then sealed by crimping so that a 2032-size test coin battery was obtained. The battery was then washed with ethanol and subjected to battery evaluation as described below.

The test battery was subjected to the battery performance evaluation procedure described below for determining its capacity retention at 2C, charge capacity, discharge capacity, and coulombic efficiency.

### (Positive Electrode Evaluation Method)

At room temperature (25°C), the test battery was charged at a constant current of 1.25 mA (equivalent to 0.2C) from open-circuit voltage to 4.2 V (constant current charge), and continuously charged at a constant voltage of 4.2 V until 0.31 mA (0.05C) was reached. Subsequently, the battery was discharged at a constant current of 1.25 mA until 3.0 V was reached. The charge capacity, discharge capacity, and average voltage were determined for this process, and the coulombic efficiency ((the discharge capacity/the charge capacity) × 100) (%) was calculated. Next, the same test battery was charged at a constant current of 1.25 mA (equivalent to 0.2C) from open-circuit voltage to 4.2 V (constant current charge), and continuously charged at a constant voltage of 4.2 V until 0.31 mA (0.05C) was reached. Subsequently, the battery was discharged at a constant current of 12.5 mA (equivalent to 2C) (high rate) until 3.0 V was reached. The resulting discharge capacities of the test battery were used to calculate the capacity retention at 2C ((capacity at 2C/capacity at 0.2C) × 100) (%). The results are shown together with the oil absorption and other data in Table 10.

**[Table 10]**

| Table 10: Characteristics of lithium-ion secondary battery with positive electrode containing each carbon material | | | | | | | |
|---|---|---|---|---|---|---|---|
| | Carbon material | Properties of carbon material | | Battery characteristics | | | |
| | | Oil absorption [mL/100g] | Total pore volume [cc/g] | Capacity retention at 2C [%] | Charge capacity [mAh/g] | Discharge capacity [mAh/g] | Coulombic efficiency [%] |
| Example 1 | A | 1889 | 4.34 | 79 | 165 | 145 | 87.9 |
| Example 2 | B | 2201 | 3.47 | 75 | 162 | 142 | 87.7 |
| Example 3 | C | 1678 | 5.35 | 79 | 167 | 146 | 87.4 |
| Example 4 | D | 1140 | 5.62 | 75 | 160 | 140 | 87.5 |
| Example 5 | E | 703 | 2.95 | 62 | 151 | 130 | 86.1 |
| Example 6 | F | 2280 | 3.81 | 74 | 166 | 146 | 88.0 |
| Example 7 | A₀ | 2297 | 6.03 | 74 | 164 | 141 | 86.5 |
| Comparative Example 1 | DB Li-100 | 303 | 0.26 | 19 | 146 | 122 | 83.6 |
| Comparative Example 2 | G | 430 | 2.40 | 39 | 121 | 71 | 58.4 |
| Comparative Example 3 | H | 492 | 1.98 | 45 | 149 | 127 | 85.7 |

The capacity retention at 2C is an evaluation parameter for measuring the high-rate discharge performance of the battery. The capacity retention at 2C was significantly higher for the carbon materials A to F and A₀ than for the carbon materials of Comparative Examples 1 to 3. In addition, the capacity retention at 2C for battery performance has been found to correlate to some extent with the oil absorption of the carbon material. The use of the carbon material with an oil absorption of at least 550 mL/100 g, specifically at least 700 mL/100 g has been found to lead to an increase in capacity retention at 2C. The capacity retention at 2C has also been found to correlate to some extent with the total pore volume of the carbon material.

### EXPLANATION OF REFERENCE NUMERALS

50: Spectrometer
41: Radiation thermometer
42: Sample holder
43: High-frequency induction coil
TMP: Turbo molecular pump
RP: Rotary pump
P1: Cold cathode Pirani gauge
P2: Capacitance gauge

## Claims

1. A carbon material having an oil absorption of 550 mL/100 g or more in accordance with JIS K 5101-13-1:2004.

2. The carbon material according to claim 1, comprising one or more combined structures each having an extended shape with pores, wherein the one or more combined structures each have hollow particulate parts combined in a bead-chain-like configuration, and the hollow particulate parts each comprise a surrounding wall forming a comparted interior space of the hollow particulate parts and being made of a graphene structure-containing carbonaceous material.

3. The carbon material according to claim 1, wherein the carbon material has an intensity ratio (I_{G}/I_{2D}) of an intensity of a G band (I_{G}) to an intensity of a 2D band (I_{2D}) of 0.4 to 5.0 in Raman spectroscopic measurement.

4. The carbon material according to claim 1, wherein the carbon material has a mode pore size of 1 to 100 nm.

5. The carbon material according to claim 1, wherein the carbon material has a total pore volume of 0.1 to 20 cc/g.

6. The carbon material according to claim 5, wherein the carbon material has a macropore volume of 5% or more with respect to the total pore volume.

7. The carbon material according to claim 1, wherein the carbon material has an apparent density of 2 g/cc or less.

8. The carbon material according to claim 1, wherein the carbon material has a BET specific surface area of 100 to 2,700 m²/g.

9. The carbon material according to claim 1, wherein the carbon material has a crystallite size Lc(002) in a c-axis direction of 0.1 to 5 nm in X-ray diffraction (XRD) measurement.

10. The carbon material according to claim 1, wherein the carbon material has an interplanar distance d002 between (002) planes of 3 to 5 Å in X-ray diffraction (XRD) measurement.

11. The carbon material according to claim 1, wherein the carbon material has a particle size distribution with a median diameter D50 of 1 to 100 µm in laser diffraction-scattering measurement.

12. The carbon material according to claim 1, wherein the carbon material has a particle size distribution with a ratio of D90 to D10 (D90/D10 ratio) of 100 or less in laser diffraction-scattering measurement.

13. The carbon material according to claim 1, wherein the carbon material has a particle size distribution with a ratio of D90 to mode pore size M (D90/M ratio) of 50,000 or less in laser diffraction-scattering measurement.

14. The carbon material according to claim 1, wherein the carbon material is a graphene mesosponge.

15. The carbon material according to claim 1, wherein the carbon material is for use in a secondary battery.

16. A method for producing the carbon material according to any one of claims 1 to 15, the method comprising:
providing a carbonaceous layer-coated template material that comprises: a template material of an agglomerate of primary particles agglomerated in a bead-chain-like configuration; and a carbonaceous layer provided to cover a surface of the template material; and
removing the template material from the carbonaceous layer-coated template material to form a carbon material precursor.

17. A production method of the carbon material according to any one of claims 1 to 15, the method comprising:
providing a carbonaceous layer-coated template material that comprises: a template material of an agglomerate of primary particles agglomerated in a bead-chain-like configuration; and a carbonaceous layer provided to cover a surface of the template material;
removing the template material from the carbonaceous layer-coated template material by dissolution using acid treatment to form a carbon material precursor; and
heating the carbon material precursor to produce a carbon material that comprises one or more combined structures each having an extended shape with pores, wherein the one or more combined structures each have hollow particulate parts combined in a bead-chain-like configuration, and the hollow particulate parts each comprise a surrounding wall forming a comparted interior space of the hollow particulate parts and being made of a graphene structure-containing carbonaceous material.

18. The production method according to claim 17, wherein the template material comprises at least one type of particles selected from the group consisting of ceramic particles and carbonate salt particles.

19. A liquid dispersion comprising: a dispersion medium; and the carbon material according to any one of claims 1 to 15 dispersed in the dispersion medium.

20. A composition for an electrode comprising: the carbon material according to any one of claims 1 to 15; an active material; and a binder.

21. A slurry for an electrode comprising a solvent; and the composition for an electrode according to claim 20 dispersed in the solvent.

22. An electrode comprising the carbon material according to any one of claims 1 to 15.

23. A lithium-ion secondary battery comprising the carbon material according to any one of claims 1 to 15.
